# EUROPEAN PATENT APPLICATION

(11) **EP 2 506 580 A1**
(43) Date of publication of application: **03.10.2012**
(21) Application number: 11840564.6
(22) Date of filing: 01.11.2011
(51) Int. Cl.: H04N 13/00, H04N 7/025, H04N 7/03, H04N 7/035

(54) **STEREOSCOPIC IMAGE DATA TRANSMISSION DEVICE, STEREOSCOPIC IMAGE DATA TRANSMISSION METHOD, AND STEREOSCOPIC IMAGE DATA RECEPTION DEVICE**

(30) Priority: 15.12.2010 JP 2010279765; 08.11.2010 JP 2010250326
(71) Applicant: Sony Corporation, Tokyo 108-0075 (JP)
(72) Inventor: TSUKAGOSHI, Ikuo, Tokyo 108-0075 (JP)
(74) Representative: Körber, Martin Hans
(86) International application number: PCT/JP2011/075134
(87) International publication number: WO 2012/063675

(57) **Abstract**

[Object] To easily realize maintaining of consistency in perspective with each object in an image, when displaying superimposing information at the time of stereoscopic image display, such as graphics information like OSD for example.

[Solution] A depth information output unit outputs depth information corresponding to a stereoscopic image. The depth information includes division information of an image display plane and depth information of the division regions. The depth information is, for example, image plane information indicating whether or not a stereoscopic image plane is on the near side from a monitor position, and further, this image plan information and disparity information. Flag information indicating the existence of the disparity information is inserted into the depth information. The depth information is included in a descriptor inserted underneath PMT or EIT or the like of a multiplexed data stream, and transmitted.

## Description

### Technical Field

The present invention relates to a stereoscopic image data transmission device, a stereoscopic image data transmission method, and a stereoscopic image data reception device, and more particularly relates to a stereoscopic image data transmission device and the like where good display of graphics information such as OSD and the like can be performed at the reception side.

### Background Art

For example, proposed in PTL 1 is a transmission method of stereoscopic image data using television broadcast airwaves. With this transmission method, stereoscopic image data having image data for the left eye and image data for the right eye is transmitted, and stereoscopic image display using binocular disparity is performed at a television receiver.

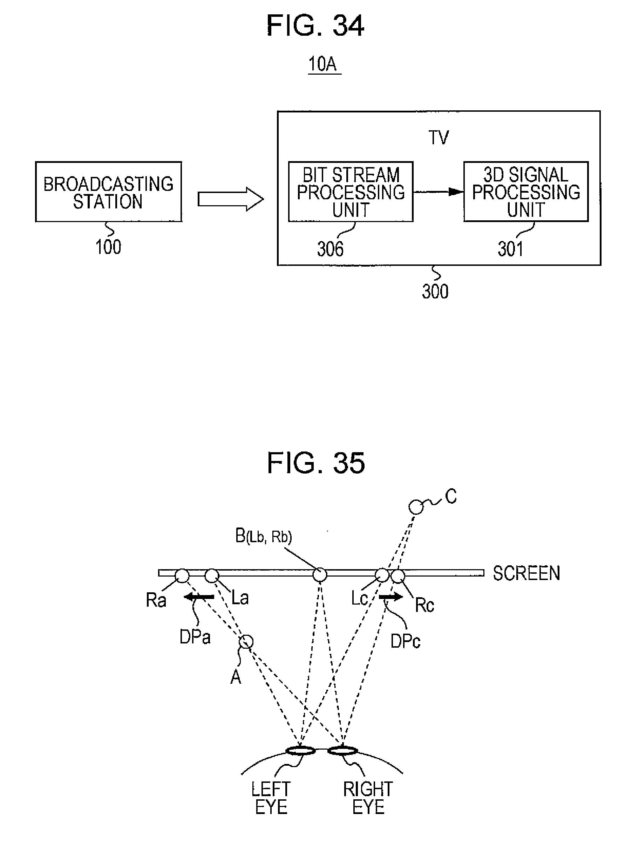

Fig. 35 illustrates relationship between the display positions of left and right images of an object (object) on a screen, and the reproduction position of the stereoscopic image thereof, when performing stereoscopic image display using binocular disparity. For example, with regard to an obj ect A displayed with a left image La being shifted to the right side and a right image Ra being shifted to the left side on the screen as illustrated in the drawing, the left and right visual lines intersect in front of the screen surface, so the reproduction position of the stereoscopic image thereof is at the near side of the screen face. DPa represents a disparity vector (disparity information) in the horizontal direction relating to the object A.

Also, for example, as illustrated on the screen, with regard to an obj ect B where a left image Lb and a right image Rb are displayed on the same position, the left and right visual lines intersect on the screen surface, so the reproduction position of the stereoscopic image thereof is on the screen surface, i.e., monitor position. Further, for example, with regard to an object C displayed with a left image Lc being shifted to the left side and a right image Rc being shifted to the right side on the screen as illustrated in the drawing, the left and right visual lines intersect in the back from the screen surface, so the reproduction position of the stereoscopic image is in the back from the screen surface. DPc represents a disparity vector in the horizontal direction relating to the object C.

### Citation List

### Patent Literature

PTL 1: Japanese Unexamined Patent Application Publication No. 2005-6114

### Summary of Invention

### Technical Problem

As described above, with stereoscopic image display, the viewer will normally sense perspective of the stereoscopic image taking advantage of binocular disparity. It is anticipated that superimposed information superimposed on the image, such as graphics information like OSD (On Screen Display) and so forth for example, will be rendered not only in two-dimensional space but further in conjunction with the stereoscopic image display with a three-dimensional sense of depth.

For example, in the event of performing superimposed display (overlay display) of graphics information such as OSD or the like on an image, the viewer may sense inconsistency in perspective unless the display is made nearer to the viewer than the plane of the closest object (object) within the image in terms of perspective (hereinafter referred to as "stereoscopic image plane"). That is to say, in a case of performing superimposed display of graphics information such as OSD or the like on an image, it is anticipated that disparity adjustment will be made in accordance to the perspective of the objects within the image, so as to maintain consistency in perspective.

It is an object of the present invention to maintain consistency in perspective with objects in an image when displaying superimposed information such as graphics information like OSD and so forth in stereoscopic image display.

### Solution to Problem

A concept of the present invention is a stereoscopic image data transmission device including:
an image data output unit configured to output left eye image data and right eye image data making up a stereoscopic image;
a depth information output unit configured to output depth information corresponding to the stereoscopic image; and
a transmission unit configured to transmit the image data and the depth information;
wherein the depth information includes division information of an image display plane and depth information of the division regions;
and wherein the transmission unit transmits a multiplexed data stream having a data stream including the image data, and inserts a descriptor including the depth information in the multiplexed data stream.

With the present invention, an image data output unit outputs left eye image data and right eye image data making up a stereoscopic image. Also, a depth information output unit output depth information corresponding to the stereoscopic image. A transmission unit then transmits the image data and the depth information. This depth information includes division information of an image display plane and depth information of the division regions.

For example, depth information may be image plane information indicating whether or not the stereoscopic image plane (the plane of the closest object in the image in terms of perspective) is on the near side from the monitor position. This image plane information may also be code information making up disparity information (disparity vector) of a left eye image and right eye image, for example. In the event that the code of the disparity information is negative, it can be understood that the stereoscopic image plane is on the near side from the monitor position.

Also, for example, depth information may be image plane information indicating whether or not a stereoscopic image plane is on the near side from a monitor position, or disparity information of a left eye image and right eye image, and flag information indicating the existence of the disparity information may be inserted into the depth information. For example, depth information may be code information making up the disparity information, or absolute value information making up the code information and the disparity information. In this case, the code information of the disparity information makes up the image plane information.

By disparity information being included besides image plane information as depth information, not only can whether or not the position of the stereoscopic image plane is on the near side from the monitor position be comprehended at the reception side, but also the position thereof can be comprehended in greater detail. Also, due to flag information being inserted, either just image plane information, or both image plane information and disparity information, can be selectively transmitted.

For example, the division information may be made up of information indicating division type and information indicating the number of divisions. Due to division information being made of two information in this way, a greater number of division patterns can be specified with few number of information. For example, the division types include a division type where the image display plane is divided using diagonal lines. Also, for example, the division types include a division type where the image display plane is divided using horizontal direction lines and/or vertical direction lines.

The transmission unit transmits a multiplexed data stream having data streams including image data. A descriptor including depth information is inserted into this multiplexed data stream.

For example, the multiplexed data stream includes a program map table serving as program-specific information, indicating which program each elementary stream included in the multiplexed data stream belongs to, and the descriptor is inserted underneath the program map table. In this case, descriptors are sequentially transmitted during a program, enabling depth information to be dynamically changed during the program.

Also, for example, the multiplexed data stream includes an event information table serving as service information for performing management in increments of events, and the descriptor is inserted underneath the event information table. In this case, a descriptor is transmitted at the beginning of a program, and the depth information is fixed during the program.

Thus, with the present invention, along with left eye image data and right eye image data making up a stereoscopic image, depth information corresponding to this stereoscopic image is transmitted. Accordingly, by using the depth information at the reception side, superimposing information to be superimposed on the left eye image and right eye image, such as graphics information like OSD for example, can be used as that which has been subjected to disparity adjustment in accordance with the perspective with the objects in the image. Accordingly, consistency in the perspective with the objects in the image can be maintained in display of graphics information like OSD for example.

Also, with the present invention, the depth information includes division information of the image display plane and depth information of each display region, which is included in a descriptor inserted in the multiplexed data stream having the data streams including the stereoscopic image data, and transmitted. That is to say, transmission of depth information to the reception side can be performed easily.

Note that with the present invention, an arrangement may be made wherein, for example, the transmission unit inserts the descriptor into the multiplexed data stream, corresponding to the start point-in-time of every predetermined period of the image data, and wherein the descriptor inserted into the multiplexed data stream corresponding to the start point-in-time of every predetermined period includes depth information of a period later than the period. Accordingly, at the reception side, disparity information with smooth change in the temporal direction (frame direction), i.e., with a smooth updating curve, can be obtained as disparity information to be used at the time of providing disparity between the left eye superimposing information and right eye superimposing information for each period, by interpolation processing using the disparity information included in the depth information of this period and periods before and after this period.

Also, another concept of the present invention is a stereoscopic image data reception device including:
a reception unit configured to receive a multiplexed data stream having a data stream including left eye image data and right eye image data making up a stereoscopic image, in which is inserted a descriptor including depth information made up of division information of an image display plane and depth information of the division regions corresponding to the stereoscopic image data;
a superimposing information data output unit configured to output data of left eye superimposing information corresponding to the left eye image data obtained from the multiplexed data stream, and data of right eye superimposing information corresponding to the right eye image data obtained from the multiplexed data stream; and
a data superimposing unit configured to superimpose the data of left eye superimposing information and the data of right eye superimposing information on the left eye image data and the right eye image data obtained from the multiplexed data stream;
wherein the superimposing data output unit provides disparity between the left eye superimposing information and the right eye superimposing information, based on the depth information obtained from the multiplexed data stream.

With the present invention, a reception unit receives a multiplexed data stream having a data stream including left eye image data and right eye image data. In this multiplexed data stream is inserted a descriptor including division information of an image display plane and depth information of the division regions. For example, this descriptor is inserted underneath a program map table or even information table.

A superimposing data output unit outputs data of left eye superimposing information corresponding to the left eye image data, and data of right eye superimposing information corresponding to the right eye image data. Also, a data superimposing unit superimposes the data of left eye superimposing information and the data of right eye superimposing information on the left eye image data and the right eye image data obtained from the multiplexed data stream. Thus, graphics information such as OSD and so forth can be displayed superimposed on a stereoscopic image.

The superimposing data output unit provides disparity between the left eye superimposing information and the right eye superimposing information, based on the depth information obtained from the multiplexed data stream. Accordingly, with the present invention, consistency in the perspective with the objects in the image can be maintained in display of graphics information like OSD for example.

Note that with the present invention, for example, an arrangement may be made wherein, at the time of providing disparity between the left eye superimposing information and the right eye superimposing information based on disparity information included in the depth information, in the event there is updating of disparity information by a new descriptor being received at the reception unit, the superimposing data output unit uses disparity information obtained by interpolation processing for a plurality of frames so as to reach the new disparity information over the plurality of number of frames. Accordingly, change in disparity information used for providing disparity can be made smooth, and a situation where disparity provided to the left eye and right eye graphics information suddenly changes, giving the viewer an unnatural sensation, can be suppressed.

Also, with the present invention, for example, an arrangement may be made wherein the descriptor has been inserted into the multiplexed data stream corresponding to the start point-in-time of every predetermined period of the image data, and wherein the descriptor inserted into the multiplexed data stream corresponding to the start point-in-time of every period includes depth information of a period later than the period, and wherein at the time of providing disparity between the left eye superimposing information and the right eye superimposing information in each period, the superimposing data output unit uses disparity information obtained by interpolation processing using disparity information included in the depth information of the period and periods before and after the period. Accordingly, change in disparity information used for providing disparity can be made smooth in the temporal direction (frame direction), i.e., with a smooth updating curve for disparity information used for providing disparity, and a situation where disparity provided to the left eye and right eye graphics information suddenly changes, giving the viewer an unnatural sensation, can be suppressed.

A further concept of the present invention is a stereoscopic image data reception device including:
a reception unit configured to receive a multiplexed data stream having a data stream including left eye image data and right eye image data making up a stereoscopic image, in which is inserted a descriptor including depth information made up of division information of an image display plane and depth information of the division regions corresponding to the stereoscopic image data; and
a transmission unit configured to transmit the left eye image data and the right eye image data, and the depth information, obtained from the multiplexed data stream, to an external device via a transmission path.

With the present invention, a reception unit receives a multiplexed data stream having a data stream including left eye image data and right eye image data making up a stereoscopic image. In the multiplexed data stream is inserted a descriptor including depth information made up of division information of an image display plane and depth information of the division regions corresponding to the stereoscopic image data. For example, this descriptor is inserted underneath a program map table or event information table.

A transmission unit transmits the left eye image data and the right eye image data, and the depth information, obtained from the multiplexed data stream, to an external device via a transmission path. For example, the transmission unit transmits the image data to the external device via the transmission path in multiple channels by differential signals, and the depth information is inserted in a blanking period of the image data, thereby transmitting the depth information to the external device.

Thus, with the present invention, along with left image data and right image data making up a stereoscopic image, depth information corresponding to this stereoscopic image is transmitted to an external device via a transmission path. Accordingly, at the external device, such as an image display device like a television receiver for example, by using the depth information, superimposing information to be superimposed on the left eye image and right eye image, such as graphics information like OSD for example, can be used as that which has been subjected to disparity adjustment in accordance with the perspective with the objects in the image. Accordingly, consistency in the perspective with the objects in the image can be maintained in display of graphics information like OSD for example.

### Advantageous Effects of Invention

According to the present invention, maintaining of consistency in perspective with each obj ect in an image, when displaying superimposing information at the time of stereoscopic image display, such as graphics information like OSD for example, can be easily realized. Brief Description of Drawings

[Fig. 1] Fig. 1 is a block diagram illustrating a configuration example of a stereoscopic image display system as an embodiment of the present invention.
[Fig. 2] Fig. 2 is a block diagram illustrating a configuration example of a transmission data generating unit at a broadcasting station.
[Fig. 3] Fig. 3 is a diagram illustrating image data of a 1920 x 1080p pixel format.
[Fig. 4] Fig. 4 is a diagram for describing a "Top & Bottom" format, a "Side by Side" format, and a "Frame Sequential" format, which are transmission formats of stereoscopic image data (3D image data).
[Fig. 5] Fig. 5 is a diagram for describing an example of detecting disparity vectors in a right eye image as to a left eye image.
[Fig. 6] Fig. 6 is a diagram for describing obtaining disparity vectors by block matching format.
[Fig. 7] Fig. 7 is a diagram illustrating a position map example, in a case of four-way division with division type 1 where an image display plane is divided using diagonal lines.
[Fig. 8] Fig. 8 is a diagram illustrating a case of superimposed display of OSD graphics information having been shifted to edge portions of the image.
[Fig. 9] Fig. 9 is a diagram illustrating a position map example, in a case of eight-way division with division type 1 where an image display plane is divided using diagonal lines.
[Fig. 10] Fig. 10 is a diagram illustrating a position map example, in a case of four-way division with division type 2 where an image display plane is divided equally in the horizontal direction and vertical direction.
[Fig. 11] Fig. 11 is a diagram illustrating a case of superimposed display of OSD graphics information having been shifted to corner portions of the image.
[Fig. 12] Fig. 12 is a diagram illustrating a position map example, in a case of nine-way division with division type 2 where an image display plane is divided equally in the horizontal direction and vertical direction.
[Fig. 13] Fig. 13 is a diagram illustrating a position map example, in a case of five-way division with division type 3 where an image display plane is divided using diagonal lines and the sides of a rectangle.
[Fig. 14] Fig. 14 is a diagram illustrating a way to obtain a representative of disparity information in each divided region in a divided pattern where an image display plane is divided four ways using diagonal lines.
[Fig. 15] Fig. 15 is a diagram describing that, in a case of superimposed display of OSD graphics information having been shifted to edge portions of the image, disparity can be provided to left eye and right eye OSD graphics information using disparity information (representative) of divided regions corresponding to the superimposed display positions.
[Fig. 16] Fig. 16 is a diagram illustrating a configuration example of a multiplexed data stream where a descriptor (z-Surface descriptor) is situated in a program descriptor (Program Descriptor) within PMT, which is to say underneath PMT (case 1).
[Fig. 17] Fig. 17 is a diagram illustrating a configuration example of a multiplexed data stream where a descriptor (z-Surface descriptor) is situated in a descriptor (descriptor) portion of a video elementary loop (Video Esloop), which is to say underneath PMT (case 2).
[Fig. 18] Fig. 18 is a diagram illustrating a configuration example of a multiplexed data stream where a descriptor (z-Surface descriptor) is situated underneath EIT (case 3).
[Fig. 19] Fig. 19 is a diagram illustrating a case of inserting a descriptor (z-Surface descriptor) underneath PMT, and sequentially transmitting descriptors during a program period so that depth information is dynamically changed.
[Fig. 20] Fig. 20 is a flowchart for describing an overview of scene detection and descriptor transmission.
[Fig. 21] Fig. 21 is a diagram illustrating, in a case of including, in a descriptor (z-Surfacedescriptor) transmitted at a start point-in-time of each period, depth information of a period one later, the relation between the transmission timing of descriptors and the depth information included in the descriptors.
[Fig. 22] Fig. 22 is a diagram illustrating a case of inserting a descriptor (z-Surface descriptor) underneath EIT, fixing the depth information during a program period.
[Fig. 23] Fig. 23 is a diagram illustrating a configuration example (Syntax) of a descriptor (z-Surface descriptor).
[Fig. 24] Fig. 24 is a diagram illustrating the contents of primary information (Semantics) in the configuration example of a descriptor (z-Surface descriptor).
[Fig. 25] Fig. 25 is a diagram illustrating another configuration example (Syntax) of a descriptor (z-Surface descriptor).
[Fig. 26] Fig. 26 is a block diagram illustrating a configuration example of a set top box.
[Fig. 27] Fig. 27 is a diagram for describing interpolation processing of disparity information at an OSD display data generating unit.
[Fig. 28] Fig. 28 is a diagram for describing an example of interpolation processing in a case of including, in a descriptor (z-Surface descriptor) transmitted corresponding to a start point-in-time of each period, depth information of a period one later.
[Fig. 29] Fig. 29 is a block diagram illustrating a configuration example of a television receiver.
[Fig. 30] Fig. 30 is a block diagram illustrating a configuration example of an HDMI transmission unit (HDMI source) and HDMI reception unit (HDMI sink).
[Fig. 31] Fig. 31 is a diagram illustrating a configuration example of TMDS transmission data (case of image data transmitted with horizontal × vertical being 1920 pixels × 1080 lines).
[Fig. 32] Fig. 32 is a diagram illustrating a pin array (Type A) of an HDMI terminal to which an HDMI cable of a source device and sink device is to be connected.
[Fig. 33] Fig. 33 is a diagram illustrating a packet configuration example of HDMI Vendor Specific InfoFrame, in a case of using HDMI Vendor SpecificInfoFrame for transmission of depth information set.
[Fig. 34] Fig. 34 is a block diagram illustrating another configuration example of a stereoscopic image display system.
[Fig. 35] Fig. 35 is a diagram for describing the relation between the display position of left and right images of an object on a screen and the reproduction position of the stereoscopic image thereof, in stereoscopic image display using binocular disparity.

### Description of Embodiments

A mode for implementing the present invention (hereafter, referred to as "embodiment") will now be described. Note that description will be made in the following sequence.
1. Embodiment
2. Modifications

### <1. Embodiment>

### [Configuration Example of Stereoscopic Image Display System]

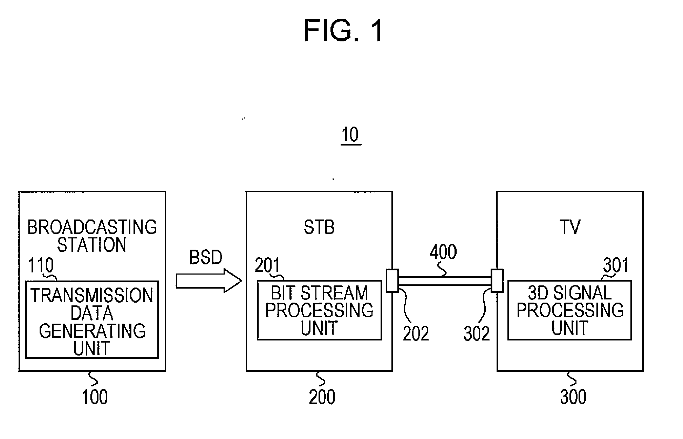

Fig. 1 illustrates a configuration example of a stereoscopic image display system 10 as an embodiment. This stereoscopic image display system 10 includes a broadcasting station 100, a set top box (STB) 200, and a television receiver (TV) 300.

The set top box 200 and the television receiver 300 are connected via an HDMI (High Definition Multimedia Interface) cable 400. With the set top box 200, an HDMI terminal 202 is provided. With the television receiver 300, an HDMI terminal 302 is provided. One end of the HDMI cable 400 is connected to the HDMI terminal 202 of the set top box 200, and the other end of this HDMI cable 400 is connected to the HDMI terminal 302 of the television receiver 300.

### [Description of Broadcasting Station]

The broadcasting station 100 transmits bit stream data BSD by carrying this on broadcast waves. The broadcasting station 100 has a transmission data generating unit 110 which generates bit stream data BSD. This bit stream data BSD includes image data, audio data, depth information, and so forth. Here, the image data (hereinafter referred to as "stereoscopic image data" as appropriate) includes left eye image data and right eye image data making up a stereoscopic image. Audio data is audio data corresponding to this stereoscopic image. Depth information corresponds to this stereoscopic image, and includes dividing information of the image display plane and information of depth for each divided region.

### [Configuration Example of Transmission Data Generating Unit]

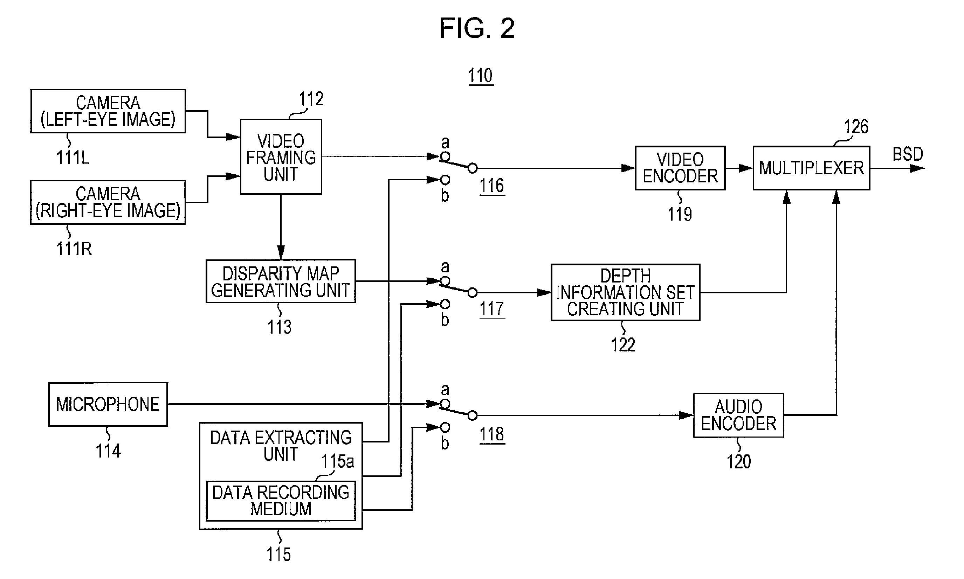

Fig. 2 illustrates a configuration example of the transmission data generating unit 110 which generates transmission data in the broadcasting station 100. This transmission data generating unit 110 has cameras 111L and 111R, a video framing unit 112, a disparity map generating unit 113, a microphone 114, a data extracting unit 115, and switchover switches 116 through 118. The transmission data generating unit 110 also has a video encoder 119, an audio encoder 120, a depth information set creating unit 122, and a multiplexer 126.

The camera 111L shoots left eye images and obtains left eye image data for stereoscopic image display. The camera 111R shoots right eye images and obtains right eye image data for stereoscopic image display. The video framing unit 112 processes the left eye image data obtained with the camera 111L and the right eye image data obtained with the camera 111R into stereoscopic image data (3D image data) corresponding to the transmission format. This video framing unit 112 configures an image data output unit.

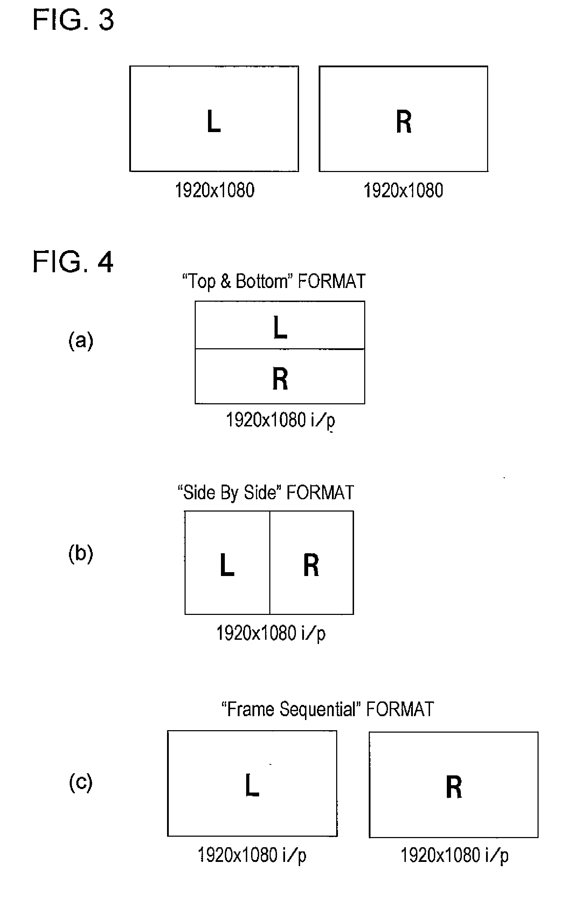

An example of the transmission format of stereoscopic image data will be described. While the following first through third formats are given as transmission formats, transmission formats other than these may be used. Here, as illustrated in Fig. 3, description will be made regarding a case where each piece of image data of the left eye (L) and the right eye (R) is image data with determined resolution, e.g., a pixel format of 1920 × 1080, as an example.

The first transmission format is a top & bottom (Top & Bottom) format, and is, as illustrated in Fig. 4(a), a format for transmitting the data of each line of left eye image data in the first half of the vertical direction, and transmitting the data of each line of left eye image data in the second half of the vertical direction. In this case, the lines of the left eye image data and right eye image data are thinned out to 1/2, so the vertical resolution is reduced to half as to the original signal.

The second transmission format is a side by side (Side By Side) format, and is, as illustrated in Fig. 4(b), a format for transmitting pixel data of the left eye image data in the first half of the horizontal direction, and transmitting pixel data of the right eye image data in the second half of the horizontal direction. In this case, the left eye image data and right eye image data each have the pixel data thereof in the horizontal direction thinned out to 1/2, so the horizontal resolution is reduced to half as to the original signal.

The third transmission format is a frame sequential (FrameSequential) format, and is, as illustrated in Fig. 4(c), a format for transmitting left eye image data and right eye image data by sequentially switching these for each frame. This frame sequential format is also sometimes called full frame (Full Frame) format or backward compatible (BackwardCompatible) format.

Returning to Fig. 2, the disparity map generating unit 113 detects disparity information (disparity vector) for each pixel making up the image, for example, based on the left eye image data and right eye image data, and creates a disparity map. The disparity information is configured of code information and absolute value information. For example, the code of disparity information of a pixel (pixel) sensed to be nearer than a monitor position is negative, and the code of disparity information of a pixel (pixel) sensed to be farther than the monitor position is positive. Also, the farther the pixel is to be sensed to be from the monitor position, the greater the absolute value of the disparity information is.

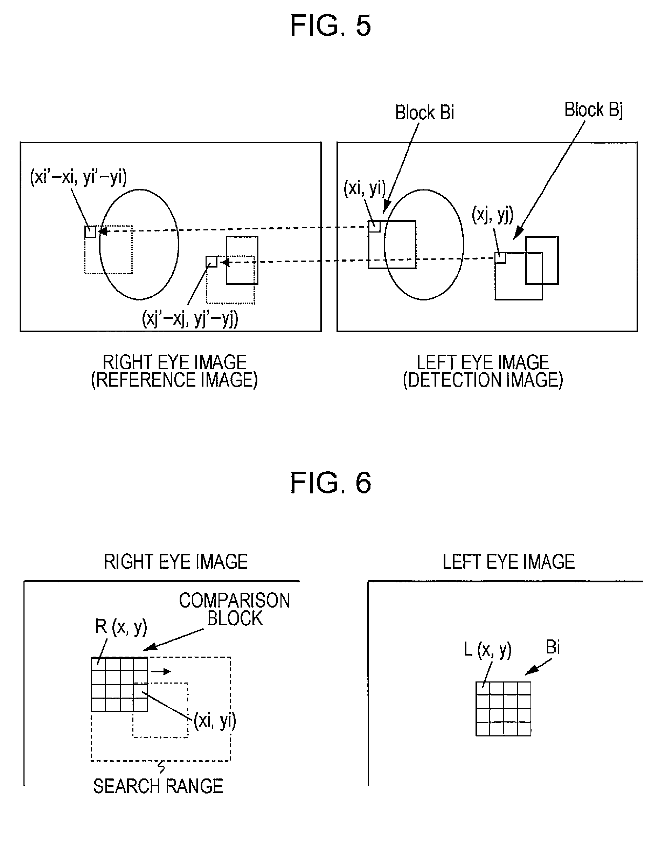

A detection example of disparity vectors will be described. Here, an example of detecting a disparity vector of a right eye image as to a left eye image will be described. As illustrated in Fig. 5, the left eye image will be taken as a detection image, and the right eye image will be taken as a reference image. With this example, disparity vectors in the positions of (xi, yi) and (xj, yj) will be detected.

Description will be made regarding a case where the disparity vector in the position of (xi, yi) is detected, as an example. In this case, a pixel block (disparity detection block) Bi of, for example, 4 × 4, 8 × 8, or 16 × 16 with the pixel position of (xi, yi) as upper left is set to the left eye image. Subsequently, with the right eye image, a pixel block matched with the pixel block Bi is searched.

In this case, a search range with the position of (xi, yi) as the center is set to the right eye image, and comparison blocks of, for example, 4 × 4, 8 × 8, or 16 × 16 as with the above pixel block Bi are sequentially set with each pixel within the search range sequentially being taken as the pixel of interest.

Summation of the absolute value of difference for each of the corresponding pixels between the pixel block Bi and a comparison block sequentially set is obtained. Here, as illustrated in Fig. 6, if we say that the pixel value of the pixel block Bi is L(x, y), and the pixel value of a comparison block is R(x, y), the summation of the difference absolute value between the pixel block Bi and the certain comparison block is represented with Σ|L(x, y) - R(x, y)|.

When n pixels are included in the search range set to the right eye image, finally, n summations S1 through Sn are obtained, of which the minimum summation Smin is selected. Subsequently, the position (xi', yi') of an upper left pixel is obtained from the comparison block from which the summation Smin has been obtained. Thus, the disparity vector in the position of (xi, yi) is detected as (xi' - xi, yi' - yi). Though detailed description will be omitted, with regard to the disparity vector in the position (xj, yj) as well, a pixel block Bj of, for example, 4 × 4, 8 × 8, or 16 × 16 with the pixel position of (xj, yj) as upper left is set to the left eye image, and detection is made in the same process.

The microphone 114 detects audio as to the image shot with the cameras 111L and 111R, and obtains audio data.

The data extracting unit 115 is used in a state with a data recording medium 115a detachably mounted. This data recording medium 115a is a disc-shaped recording medium, semiconductor memory, or the like. The data recording medium 115a has recorded therein, along with stereoscopic image data including the left eye image data and right eye image data, audio data and a disparity map, in a correlated manner. The data extracting unit 115 extracts from the data recording medium 115a the stereoscopic image data, audio data, and disparity map, and outputs. The data extracting unit 115 configures an image data output unit.

Now, the stereoscopic image data recorded in the data recording medium 115a is equivalent to the stereoscopic image data obtained at the video framing unit 112. Also, the audio data recorded in the data recording medium 115a is equivalent to the audio data obtained at the microphone 114. Also, the disparity map recorded in the data recording medium 115a is equivalent to the disparity vector generated at the disparity map generating unit 113.

The switchover switch 116 selectively extracts the stereoscopic image data obtained at the video framing unit 112 or the stereoscopic image data output from the data extracting unit 115. In this case, the switchover switch 116 is connected to the a side in the live mode and extracts the stereoscopic image data obtained at the video framing unit 112, and is connected to the b side in the playback mode and extracts the stereoscopic image data output from the data extracting unit 115.

The switchover switch 117 selectively extracts the disparity map generated at the disparity map generating unit 113 or the disparity map output from the data extracting unit 115. In this case, the switchover switch 117 is connected to the a side in the live mode and extracts the disparity map generated at the disparity map generating unit 113, and is connected to the b side in the playback mode and extracts the disparity map output from the data extracting unit 115.

The switchover switch 118 selectively extracts the audio data obtained at the microphone 114 or the audio data output from the data extracting unit 115. In this case, the switchover switch 118 is connected to the a side in the live mode and extracts the audio data obtained at the microphone 114, and is connected to the b side in the playback mode and extracts the audio data output from the data extracting unit 115.

The video encoder 119 subj ects the stereoscopic image data extracted at the switchover switch 116 to encoding such as MPEG4-AVC, MPEG2, VC-1, or the like, and generates a video data stream (video elementary stream). The audio encoder 120 subjects the audio data extracted at the switchover switch 118 to encoding such as AC3, AAC, or the like, and generates an audio data stream (audio elementary stream).

The depth information set creating unit 122 creates a depth information set corresponding to stereoscopic image data for a predetermined program output from the switchover switch 116, based on the disparity map extracted at the switchover switch 117. This depth information set includes division information of the image display plane, and depth information of each division region.

Description will be made regarding division information of the image display plane. This division information is made up of information indicating the division type, and information indicating the number of divisions. For example, the division type includes division types where division is performed of the image display plane using diagonal lines, types where division is performed of the image display plane using horizontal direction lines and/or vertical direction lines, and so forth. Determining the division type and number of divisions uniquely determines the division pattern of the image display plane. The division type and the number of divisions can be set by the user.

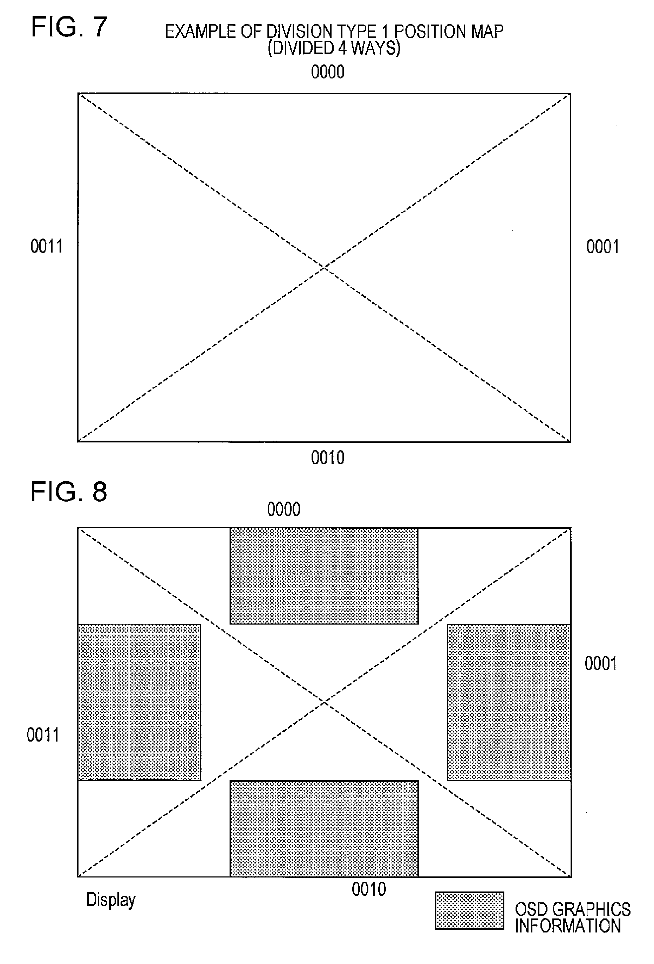

Fig. 7 illustrates a position map example in a case of dividing the image display plane four ways with division type 1 where the image display plane is divided using diagonal lines. With this example, the image display plane is divided four ways using diagonal lines, in which the upper division region is represented by "0000", the right division region is represented by "0001", the lower division region is represented by "0010", and the left division region is represented by "0011".

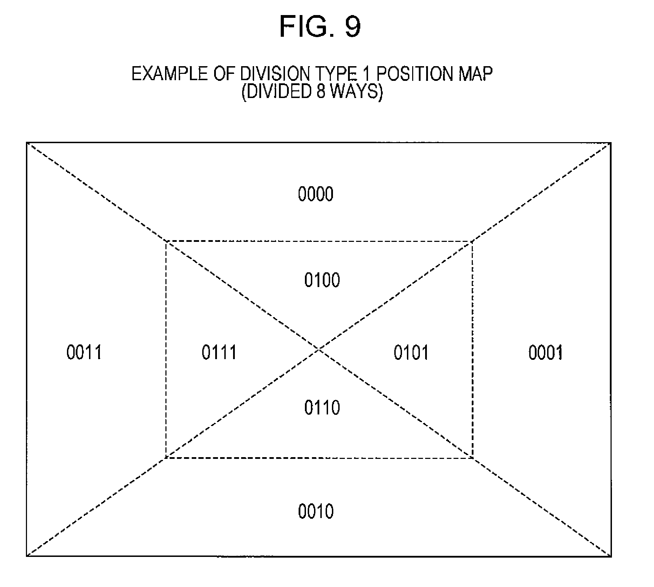

The division example shown in Fig. 7 is well suited for cases of performing superimposed display with OSD graphics information shifted to the edge portions of the image, as shown in Fig. 8 for example, since depth information corresponding to the superimposing display position can be transmitted. Fig. 9 illustrates a position map example in a case of dividing the image display plane eight ways with division type 1 where the image display plane is divided using diagonal lines. With this example, the image display plane is divided eight ways using diagonal lines and the sides of a rectangle, in which the division regions are represented by "0000" through "0111".

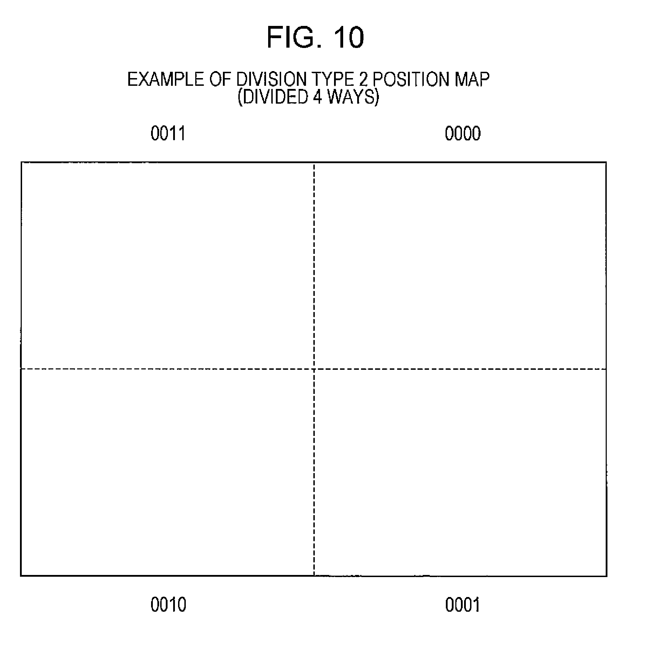

Fig. 10 illustrates a position map example in a case of dividing the image display plane four ways with division type 2 where the image display plane is divided using horizontal direction lines and vertical direction lines. With this example, the image display plane is divided four ways using diagonal lines, in which the upper right division region is represented by "0000", the lower right division region is represented by "000 1 ", the lower left division region is represented by "0010", and the upper left division region is represented by "0011".

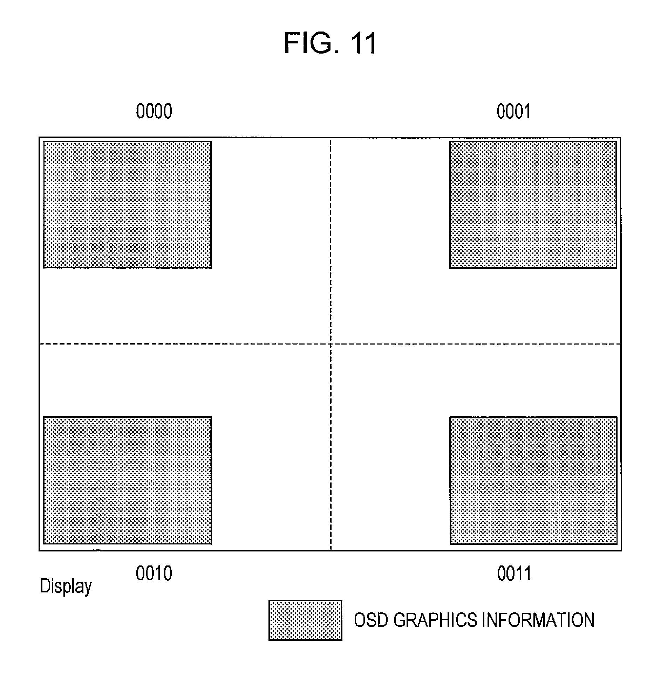

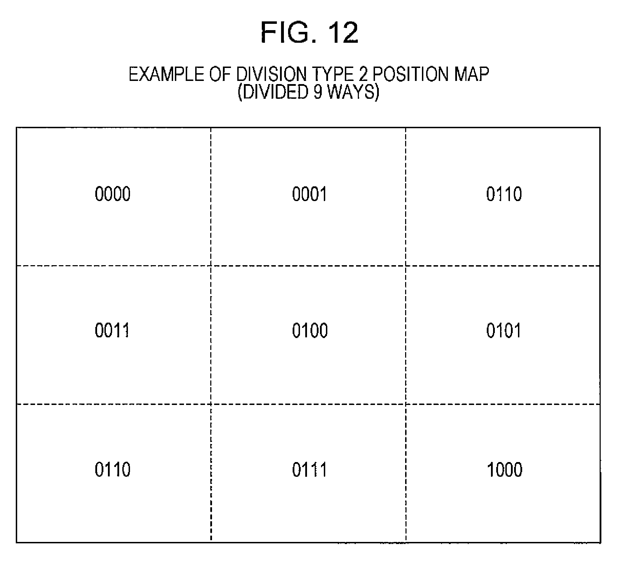

The division example shown in Fig. 10 is well suited for cases of performing superimposed display with OSD graphics information shifted to the corner portions of the image, as shown in Fig. 11 for example, since depth information corresponding to the superimposing display position can be transmitted. Fig. 12 illustrates a position map example in a case of dividing the image display plane nine ways with division type 2 where the image display plane is divided using horizontal direction lines and vertical direction lines. With this example, the image display plane is divided nine ways using horizontal direction lines and vertical direction lines, in which the division regions are represented by "0000" through "1000".

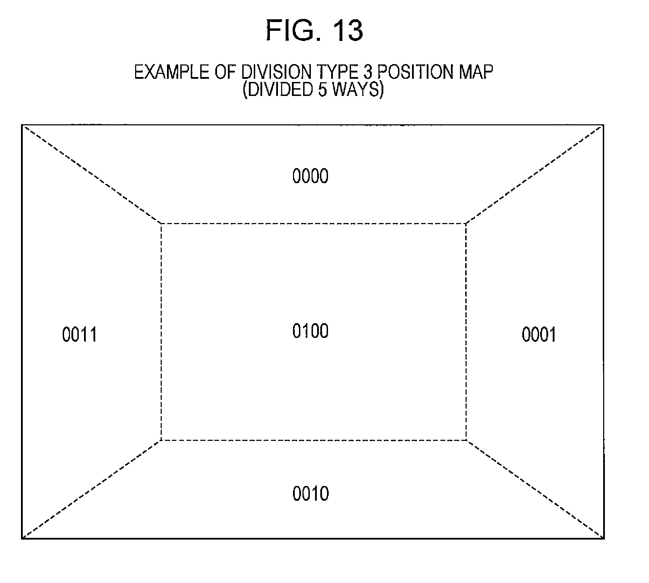

Fig. 13 illustrates a position map example in a case of dividing the image display plane five ways with division type 3 where the image display plane is divided using diagonal lines and the sides of a rectangle. With this example, the image display plane is divided five ways using diagonal lines and the sides of a rectangle, in which the upper division region is represented by "0000", the right division region is represented by "0001", the lower division region is represented by "0010", the left division region is represented by "0011", and the middle division region is represented by "0100". The division example shown in Fig. 13 is well suited for cases of performing superimposed display with OSD graphics information shifted to the edge portions of the image, or displayed superimposed at the middle portion of the image, since depth information corresponding to the superimposing display position can be transmitted.

Next, description will be made regarding depth information for each division region. The depth information includes image plane information. This image plane information is information indicating whether or not the stereoscopic image plane is at the near side of the monitor position. This stereoscopic image plane means the plane of the closest object in the image of the corresponding region, in terms of perspective. This image plane information is code information making up perspective information (perspective vector) corresponding to the stereoscopic image plane. In this case, the code information indicates "negative" in the event that the stereoscopic image plane is at the near side of the monitor position.

Also, the depth information may include, besides the above-described image plane information, disparity information. For this disparity information, the disparity information of a pixel sensed to be nearest in terms of perspective out of the disparity information (disparity vectors) of the pixels (pixels) making up the image of the corresponding region, for example, is used representatively. In this case, in the event that there is "negative" disparity information, this is the disparity information with the greatest absolute value thereof. Also, in this case, in the event that there is no "negative" disparity information, this is the disparity information with the smallest absolute value. Thus, in the event that disparity information is included, all that is necessary is to further include absolute value information making up the disparity information when the image plane information is code information making up the disparity information as described above.

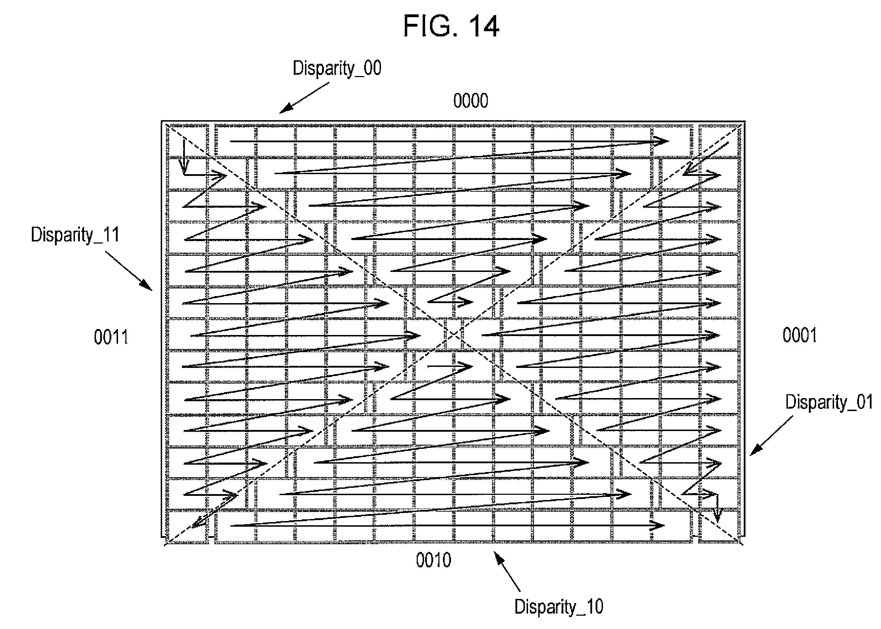

The representative of disparity information in each division region can be obtained by comparing the disparity information for each pixel or each block of a predetermined size in scanning order. Fig. 14 illustrates a way to obtain a representative of disparity information in the division regions with a division pattern where the image display plane is divided four ways by diagonal lines, as described above. In this case, "Disparity_00", "Disparity_01", "Disparity_10", and "Disparity_11" are obtained for each division region as representative disparity information.

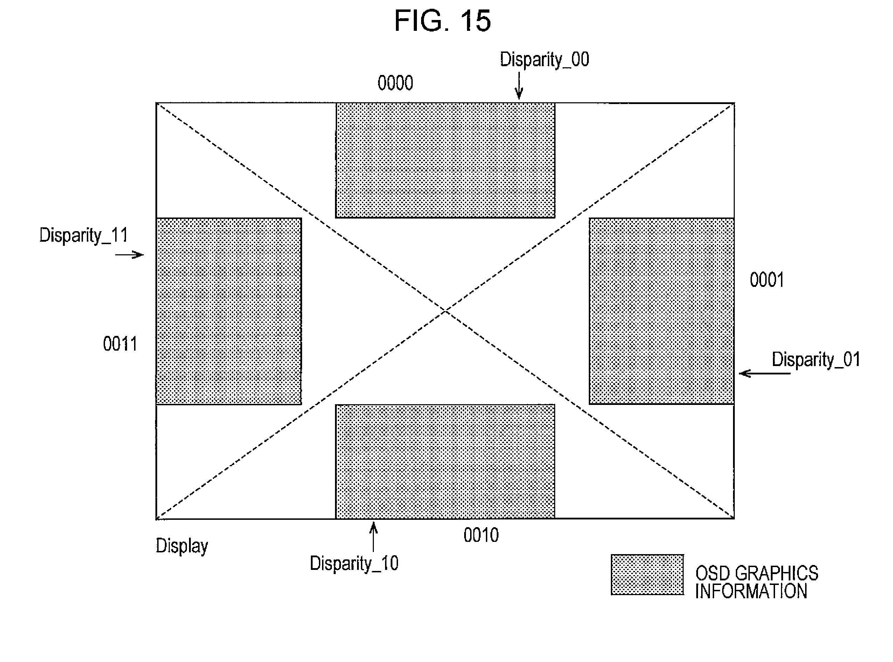

In the event of also transmitting disparity information besides the image plane information of each division region with a division pattern where the image display plane is divided four ways by diagonal lines, the representative of disparity information of each division region obtained as described above is used, for example. In this case, in the event of superimposed display of the OSD graphics information shifted to the edge portions as shown in Fig. 15, disparity can be provided to the OSD graphics information for the left eye and right eye, using the disparity information (representative) for the division region corresponding to the superimposed display position thereof.

A depth information set has inserted therein flag information indicating the existence of disparity information, for each division region or in common with all of the division regions. By including disparity information besides image plane information as depth information, not only whether or not the position of the stereoscopic image plane is on the near side of the monitor position, but the position thereof can be comprehended in more detail at the reception side. Also, due to flag information being inserted therein, just image plane information, or both screen information and disparity information, can be selectively transmitted as depth information.

When superimposing OSD graphics information on an image at the reception side, a case where OSD graphics information has to be provided to the OSD graphics information is a case where the stereoscopic image plane is at the near side of the monitor position. In this cases, there is the need to provide the left and right OSD graphics information with disparity so that the OSD graphics information is sensed as being at the near side of the stereoscopic image plane. Note however, how much disparity to provide to the left and right OSD graphics information can be optionally set at the reception side, and accordingly, transmitting the image plane information alone is quite meaningful as well.

The multiplexer 126 multiplexes the data streams from the video encoder 119 and the audio encoder 120, and obtains a multiplexed data stream as the bit stream data (transport stream) BSD. Also, the multiplexer 126 inserts into this bit stream data BSD the depth information set created at the depth information set creating unit 122. Specifically, the multiplexer 126 inserts a descriptor (z-Surface descriptor) including the depth information set at a predetermined position in PSI information or SI information inserted into the bit stream data BSD. This descriptor will be described later.

The operations of the transmission data generating unit 110 shown in Fig. 2 will be described in brief. The camera 111L shoots a left eye image. The left eye image data for stereoscopic image display obtained at the camera 111L is supplied to the video framing unit 112. Also, the camera 111R shoots a right eye image. The right eye image data for stereoscopic image display obtained at the camera 111R is supplied to the video framing unit 112. At the video framing unit 112, the left eye image data and the right eye image data are processed to a state corresponding to the transmission format, thereby yielding stereoscopic image data (see Fig. 4(a) through (c)).

The stereoscopic image data obtained at the video framing unit 112 is supplied to the a side fixed terminal of the switchover switch 116. Also, the stereoscopic image data obtained at the data extracting unit 115 is supplied to the b side fixed terminal of the switchover switch 116. In the live mode, the switchover switch 116 is connected to the a side, and the stereoscopic image data obtained at the video framing unit 112 is extracted from the switchover switch 116. In the playback mode, the switchover switch 116 is connected to the b side, and the stereoscopic image data obtained from the data extracting unit 115 is extracted from the switchover switch 116.

The stereoscopic image data extracted at the switchover switch 116 is supplied to the video encoder 119. At the video encoder 119, the stereoscopic image data is subjected to encoding such as MPEG4-AVC, MPEG2, VC-1, or the like, thereby generating a video data stream including the encoded video data. This video data stream is supplied to the multiplexer 126.

The audio data obtained at the microphone 114 is supplied to the a side fixed terminal of the switchover switch 118. Also, the audio data obtained at the data extracting unit 115 is supplied to the b side fixed terminal of the switchover switch 118. In the live mode, the switchover switch 118 is connected to the a side, and the audio data obtained at the microphone 114 is extracted from the switchover switch 118. In the playback mode, the switchover switch 118 is connected to the b side, and the audio data obtained from the data extracting unit 115 is extracted from the switchover switch 118.

The audio data extracted at the switchover switch 118 is supplied to the audio encoder 120. At the audio encoder 120, the audio data is subjected to encoding such as MPEG-2 Audio AAC, or MPEG-4 AAC or the like, thereby generating an audio data stream including the encoded audio data. This audio data stream is supplied to the multiplexer 126.

The left eye image data and right eye image data obtained at the cameras 111L and 111R are supplied to the disparity map generating unit 113 via the video framing unit 112. At this disparity map generating unit 113, disparity vectors are detected for each of the pixels (pixels) based on the left eye image data and right eye image data, and a disparity map is generated. This disparity map is supplied to the fixed terminal at the a side of the switchover switch 117. Also, the disparity map output from the data extracting unit 115 is supplied to the fixed terminal at the b side of the switchover switch 117.

In the live mode, the switchover switch 117 is connected to the a side, and the disparity map generated at the disparity map generating unit 113 is extracted from the switchover switch 117. In the playback mode, the switchover switch 117 is connected to the b side, and the disparity map output from the data extracting unit 115 is extracted from the switchover switch 117.

The disparity map extracted at the switchover switch 117 is supplied to the depth information set creating unit 122. At the depth information set creating unit 122, a depth information set corresponding to the stereoscopic image data for a predetermined program output from the switchover switch 116 is created based on the disparity map. This depth information set includes the division information of the image display plane and the depth information of each division region. This depth information set is supplied to the multiplexer 126.

At the multiplexer 126, the data streams from the video encoder 119 and the audio encoder 120 are multiplexed, thereby yielding a multiplexed data stream as bit stream data (transport stream) BSD.

The multiplexer 126 inserts into this bit stream data BSD the depth information set created at the depth information set creating unit 122. That is to say, the multiplexer 126 inserts a descriptor (z-Surface descriptor) including the depth information set at a predetermined position in PSI information or SI information inserted into the bit stream data BSD.

### [Configuration Example Of Multiplexed Data Stream]

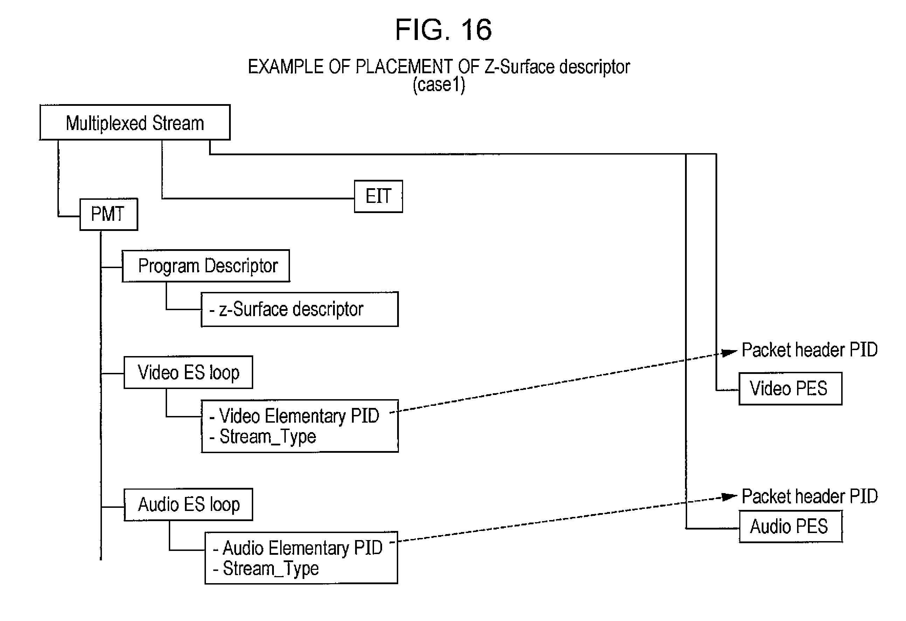

Fig. 16 through Fig. 18 illustrate a configuration example of a multiplexed data stream (Transport stream). This multiplexed data stream includes PES packets obtained by packetizing the elementary streams. With this configuration example, PES packets of the video elementary stream "Video PES" and PES packets of the audio elementary stream "AudioPES" are included.

Also, the transport stream includes a PMT (Program Map Table) as PSI (Program SpecifcInformation). This PSI is information describing to which program each elementary stream included in the transport stream belongs to. Also, the transport stream includes an EIT (Event InformationTable) as SI (Serviced Information) performing management in increments of events. Metadata in increments of programs is described in this EIT.

A program descriptor (ProgramDescriptor) in which is described information relating to the entire program exists in the PMT. An elementary loop having information relating to each elementary stream exists in this PMT. With this configuration example, there exist a video elementary loop and audio elementary loop. Each elementary loop has information such as packet identifiers (PID) situated therein for each stream, and also have situated therein descriptors (descriptors) describing information relating to the elementary streams, though not illustrated in the drawings.

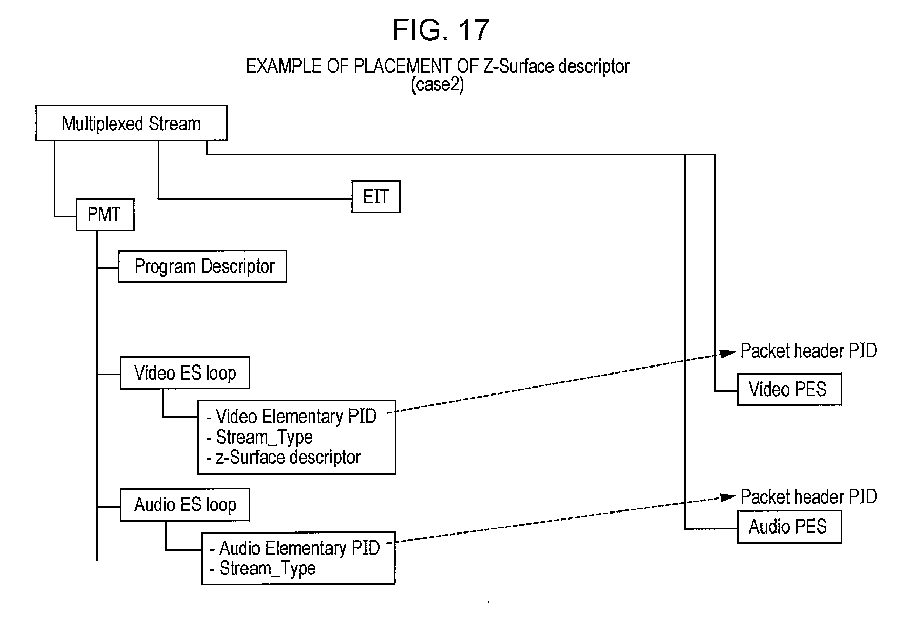

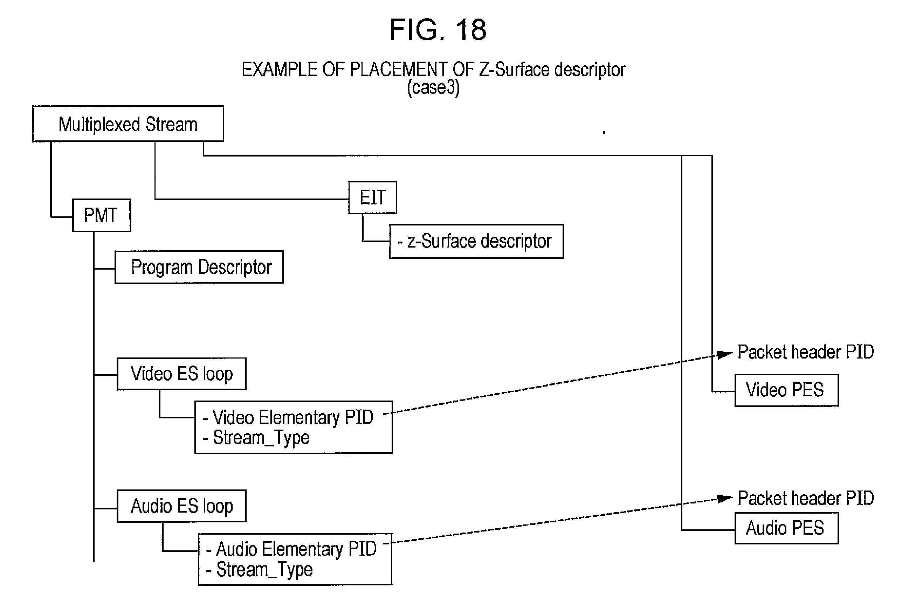

The configuration of the multiplexed data stream shown in Fig. 16 and Fig. 17 is an example of inserting the descriptor including the depth information set (z-Surface descriptor) underneath the PMT. That is to say, with the multiplexed data stream configuration example (case 1) shown in Fig. 16, the descriptor (z-Surface descriptor) is situated in the program descriptor (ProgramDescriptor) in the PMT. With the multiplexed data stream configuration example (case 2) shown in Fig. 17, the descriptor (z-Surface descriptor) is situated in the descriptor (descriptor) portion of the video elementary loop (Video ES loop). Also, the multiplexed data stream configuration example (case 3) shown in Fig. 18 is an example where the descriptor (z-Surface descriptor) including a depth information set is inserted underneath the EIT.

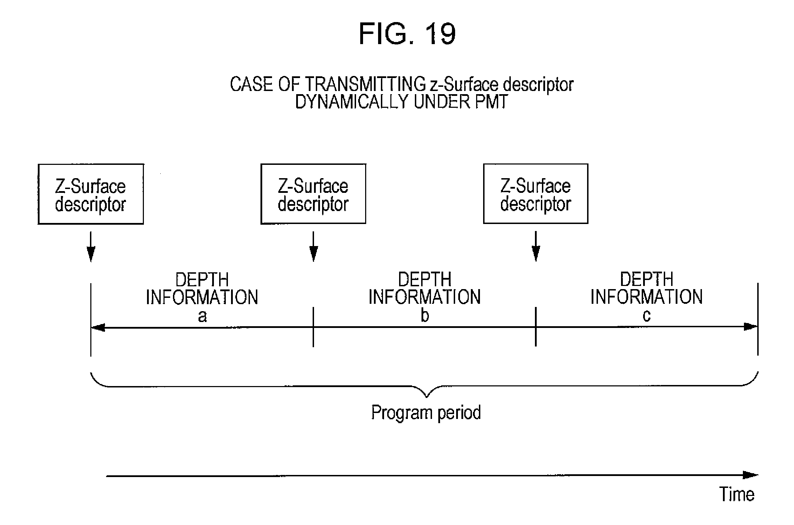

In the event of inserting the descriptor (z-Surface descriptor) including a depth information set underneath PMT, the descriptor can be transmitted at a predetermined timing during the program period and can be changed dynamically during the program period, as shown in Fig. 19. With the example shown in Fig. 19, depth information a, depth information b, and depth information c, are changed dynamically in that order during the program period. The updating period of the depth information is, for example, 100 msec, or a period longer than 100 msec.

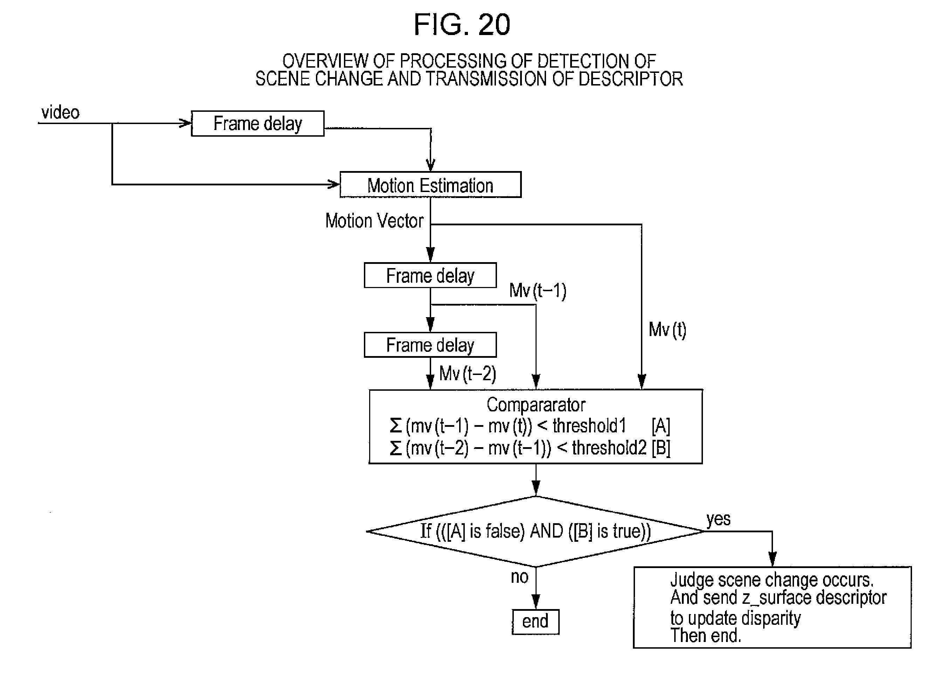

As for the timing to transmit the descriptor, for example, scene change points can be conceived. In the case, the descriptor is transmitted at the head timing during the program period, and subsequently the descriptor is transmitted every scene change point, thereby updating the depth information. Fig. 20 illustrates a processing overview of scene detection and descriptor transmission.

In this case, comparison is made between all blocks included in the current frame and the image data from one frame back, and motion vectors are detected. Then, a summation Σ(mv((t-1)-mv(t)) of the difference value of the motion vector (magnitude) of each block is calculated between the current frame and a frame one frame back, as a detected value of degree of correlation. In the same way, a summation Σ(mv((t-2)-mv(t-1)) of the difference value of the motion vector (magnitude) of each block is calculated between the frame one frame back and a frame two frames back, as a detected value of degree of correlation.

In the event that the correlation between the motion vectors between the frame one frame back and the frame two frames back is great, and moreover the correlation between the motion vectors between the current frame and the frame one frame back is low, determination is made that there has been a scene change. That is to say, in the event that "Σ(mv((t-2)-mv(t-1)) < threshold2)" holds but ∑(mv((t-1)-mv(t)) < threshold1)" does not hold, determination is made that there has been a scene change. In the event that determination has been made that there has been a scene change in this way, descriptor transmission is performed. This descriptor includes depth information corresponding to the image (image of the current frame) following the scene change. Note that the scene detection method is not restricted to the above-described example, as a matter of course.

As described above, descriptors including depth information for every predetermined period can be transmitted during the program period, and in this case, a descriptor (z-Surface descriptor) is transmitted corresponding to the start point-in-time of each period, as shown in Fig. 19. In this case, an arrangement can also be conceived in which, besides including depth information of this period in the descriptor, depth information for a period later than this period, depth information for one period later for example, as so-called advance information.

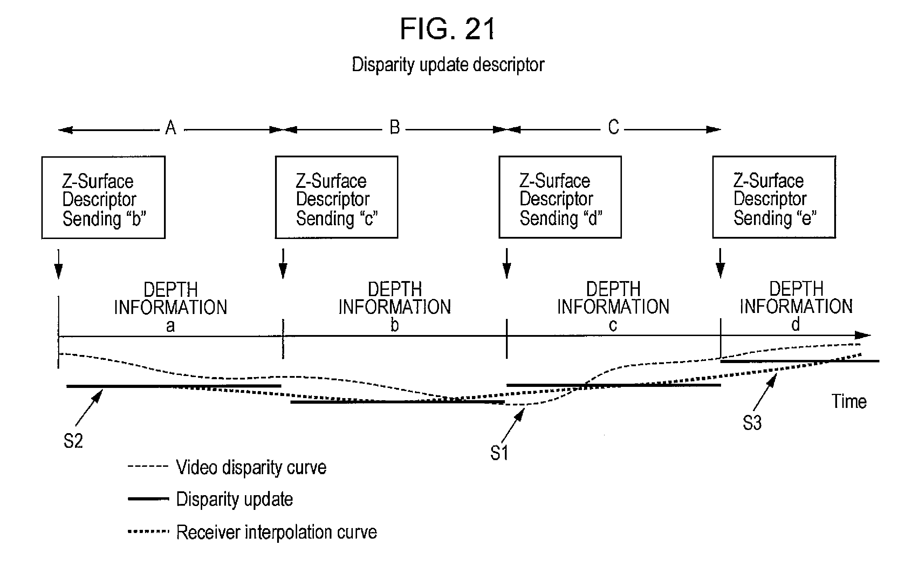

Fig. 21 illustrates the relation between the transmission timing of the descriptors (z-Surface descriptor) in this case, and the depth information included in each descriptor. For example, the descriptor (z-Surface descriptor) transmitted at the start point-in-time of period A includes the depth information b of the period B. Also, the descriptor (z-Surface descriptor) transmitted at the start point-in-time of period B includes the depth information c of the period C. This is the same for the descriptors (z-Surface descriptor) transmitted at the start points-in-time in the subsequent periods, with the descriptors including depth information of the period next.

By including depth information for a subsequent period, one period later for example, in the descriptor (z-Surfacedescriptor) transmitted at the start point-in-time of each period, as advance information, allows disparity information to be obtained at the reception side with smooth change in the temporal direction. That is to say, interpolation processing can be performed at the reception side, using the disparity information included in the depth information set of the current period and periods before and after the current period as disparity information to be used to provide disparity between the left eye superimposing information and right eye superimposing information. Accordingly, disparity information can be obtained with smooth change in the temporal direction (of frame direction), i.e., with a smooth updating curve.

Note that in Fig. 21, the dashed line S1 represents an example of a disparity information curve (Video disparity curve) in the stereoscopic image data that is transmitted, and the solid line S2 illustrates an example of disparity information updated in accordance with each period (Disparity update). With Fig. 21, the dashed line S3 illustrates an example of a disparity information curve obtained by interpolation processing (Receiver interpolation curve) at the reception side.

In this case, at the reception side, interpolation processing such as the following, for example, is performed. That is to say, at the first half of each period, in a rate of mixture of the disparity information of the previous period and the disparity information of the current period, that of the current period is sequentially raised, thereby obtaining interpolated disparity information at each point-in-time. Also, at the second half of each period, in a rate of mixture of the disparity information of the current period and the disparity information of the following period, that of the following period is sequentially raised, thereby obtaining interpolated disparity information at each point-in-time.

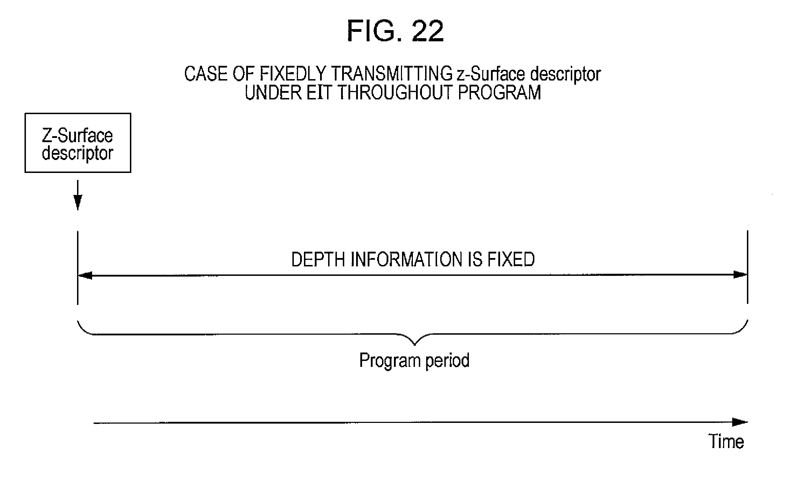

Also, in the case of inserting the descriptor (z-Surface descriptor) including a depth information set underneath EIT, the descriptor can be transmitted at the start of the program as shown in Fig. 22, and the depth information is fixed during the program period.

### [Configuration Example of Descriptor (z-Surface descriptor)]

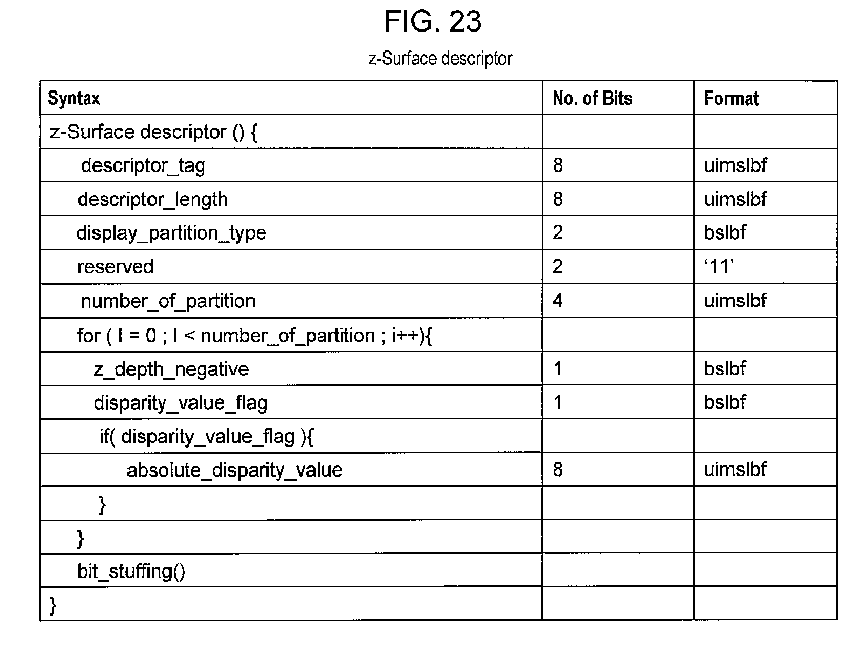

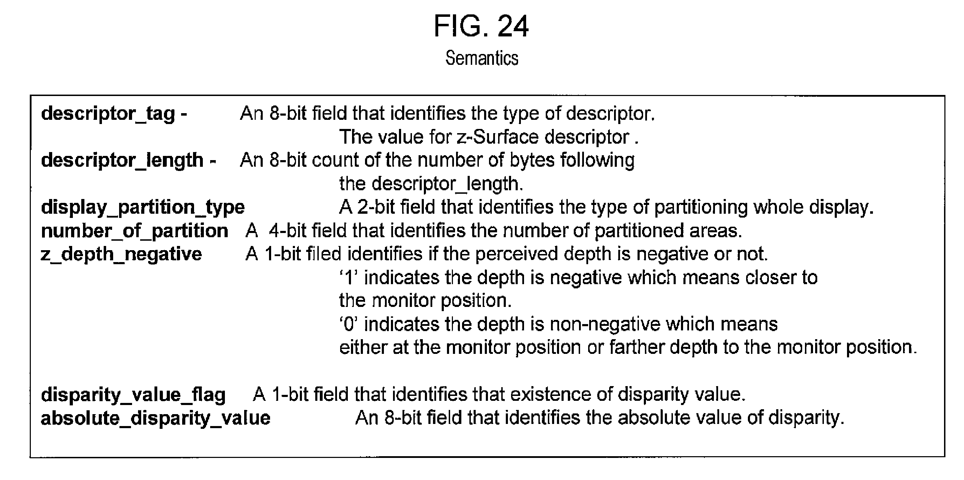

Fig. 23 illustrates a configuration example (Syntax) of a descriptor (z-Surface descriptor). Fig. 24 illustrates the primary information contents (Semantics) in the configuration example shown in Fig. 23. The 8-bit field of "descriptor_tag" represents the type of descriptor (descriptor), indicating a descriptor (z-Surface descriptor) in this case. The 8-bit field of "descriptor_length" is 8-bit data indicating the length (size) of the descriptor. This data indicates the number of bytes following "descriptor_length", as the length of the descriptor.

The 2-bit field of "display_partition_type" indicates the division type of the image display plane (see Fig. 7 through Fig. 13). The 4-bit field of "number_of_partition" indicates the number of divisions of the image display plane. Here, "0000" indicates that the image display plane has not been divided, i.e., indicates that the number of divisions = 1. In this case, single depth information as to the entire image display plane is included in the descriptor (z-Surface descriptor).

The 1-bit field of "z_depth_negative" indicates image plane information. This image plane information indicates whether or not the stereoscopic image plane (the plane of the nearest obj ect in terms of perspective, within the corresponding division region) is negative (near side) as to the monitor position, as described above. "1" indicates that the stereoscopic image is negative (near side) as to the monitor position. "1" indicates that the stereoscopic image is the same as the monitor position, or is positive (far side) as to the monitor position.

Note that with the present embodiment, as described above, code information making up disparity information is used as the 1-bit field of "z_depth_negative". The disparity information in this case is disparity information of the pixel sensed to be the nearest in terms of perspective, out of the disparity information (disparity vector) of each pixel (pixel) making up the image of the corresponding region, and is disparity information of a pixel making up the stereoscopic image plane.

The "disparity_value_flag" is 1-bit flag information indicating whether or not disparity information exists besides the above-described image plane information. The disparity information in this case is disparity information of a pixel making up the stereoscopic image plane described above. "1" indicates that disparity information exists, and "0" indicates that disparity information does not exist. In the event that this flag information is "1", an 8-bit field of "absolute_disparity_value" exists. This "absolute_disparity_value" indicates absolute value information making up the disparity information. The disparity information is configured by this absolute value information and the above-described image plane information.

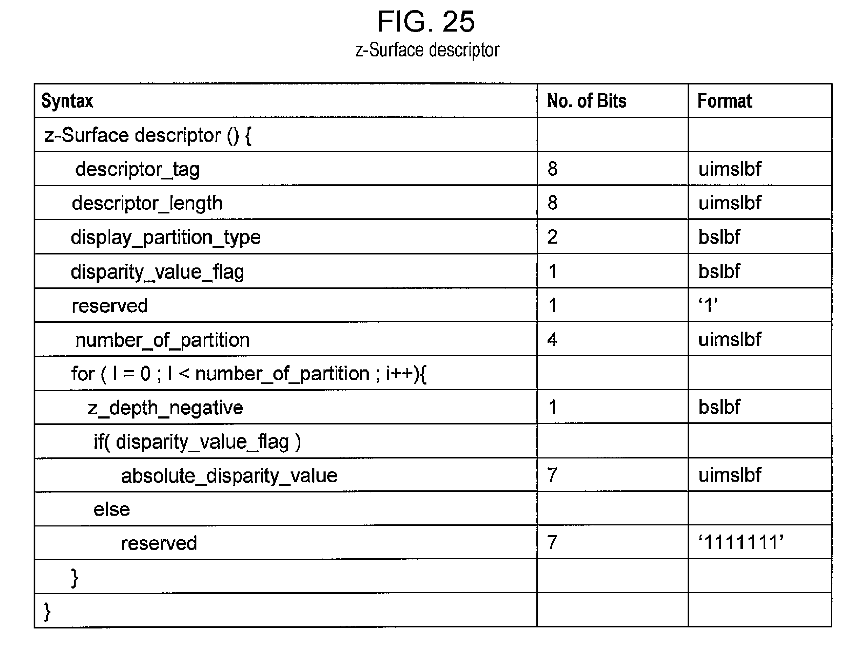

Fig. 25 illustrates another configuration example of the descriptor (z-Surface descriptor). In this configuration example, the "disparity_value_flag" is held in common among the division regions, and is situated outside of a for loop. The 1-bit field of "z_depth_negative" exists within the for loop. Also, in the event that "disparity_value_flag" is "1" and indicates that disparity information exists, a 7-bit field of "absolute_disparity_value" exists within this for loop, and otherwise, a 7-bit "reserved" exists.

With the structure example of the descriptor (z-Surface descriptor) shown in Fig. 25, byte align (Byte Align) within the for loop is secured. That is to say, with the structure example of the descriptor shown in Fig. 25, the "bit_stuffing" for securing byte align (Byte Align) within the for loop is unnecessary.

With the transmission data generating unit 110 shown in Fig. 2, a depth information set corresponding to the stereoscopic image data of a predetermined program is included in the bit stream data BSD output from the multiplexer 126, along with the stereoscopic image data of the predetermined program having the left eye image data and right eye image data. Accordingly, by using the depth information set at the reception side, that which has been subjected to disparity adjustment in accordance with the perspective of the objects within the image can be used as superimposing information to be superimposed on the left eye image and right eye image, such as graphics information like OSD or the like, for example. Accordingly, consistency in the perspective with the objects in the image can be maintained in display of graphics information like OSD for example.

Also, with the transmission data generating unit 110 shown in Fig. 2, the depth information set includes the division information of the image display plane and the depth information of each division region, and is included in the descriptor which is inserted in the bit stream data (multiplexed data stream) BSD having data streams including the stereoscopic image data and transmitted. That is to say, the depth information set can be easily transmitted to the reception side using a descriptor.

### [Description of Set Top Box]

Returning to Fig. 1, the set top box 200 receives bit stream data (transport stream) BSD transmitted over broadcast waves from the broadcasting station 100. This bit stream data BSD includes stereoscopic image data including left eye image data and right eye image data, audio data, and depth information set.

The set top box 200 includes a bit stream processing unit 201. This bit stream processing unit 201 extracts stereoscopic image data, audio data, depth information sets, and so forth, from the bit stream data BSD. This bit stream processing unit 201 generates left eye image data and right eye image data with graphics information such as OSD and so forth superimposed thereupon, as appropriate. In this case, disparity is provided between the left eye graphics to be superimposed on the left eye image and right eye graphics to be superimposed on the right eye image. Thus, by providing disparity between the left eye graphics and right eye graphics, the user can recognize the graphics information such as OSD or the like that is superimposed on the stereoscopic image, to be nearer than the image, for example.

### [Configuration Example of Set Top Box]

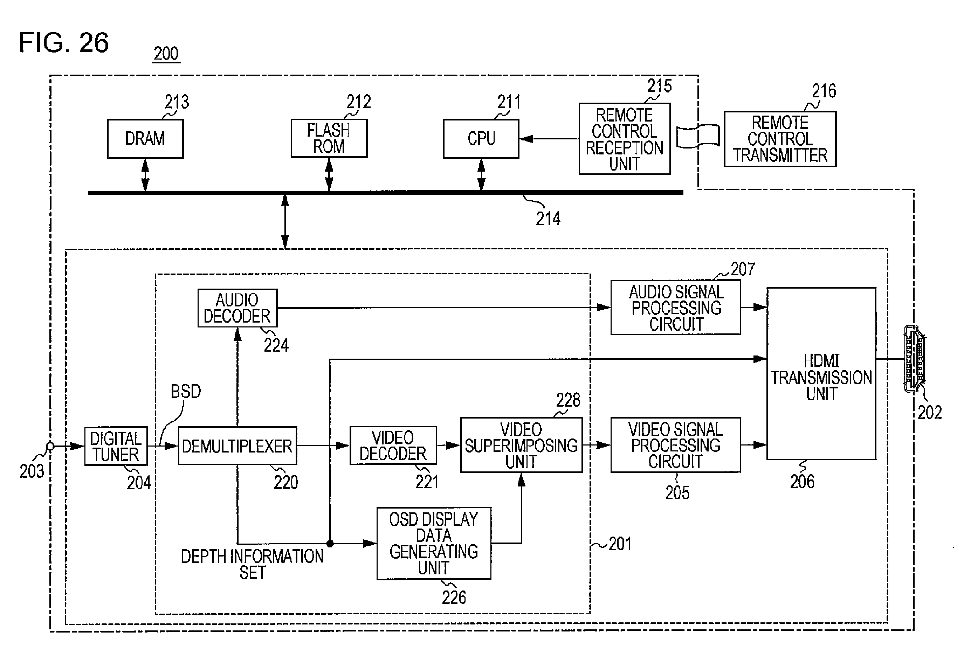

A configuration example of the set top box 200 will be described. Fig. 26 illustrates a configuration example of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. Also, this set top box 200 includes a CPU 211, flash ROM 212, DRAM 213, an internal bus 214, a remote control reception unit 215, and a remote control transmitter 216.

The antenna terminal 203 is a terminal for inputting television broadcasting signal received at a reception antenna (not illustrated). The digital tuner 204 processes the television broadcasting signal input to the antenna terminal 203, and outputs predetermined bit stream data (transport stream) BSD corresponding to the user's selected channel.

The bit stream processing unit 201 extracts stereoscopic image data, audio data, and so forth from the bit stream data BSD, and outputs this. This bit stream processing unit 201 also synthesizes the display data of graphics information like OSD or the like with the stereoscopic image data as appropriate. At this time, the bit stream processing unit 201 provides disparity between the left eye graphics information to be superimposed on the left eye image and the right eye graphics information to be superimposed on the right eye image, as appropriate.

The video signal processing circuit 205 subjects the output stereoscopic image data obtained at the bit stream processing unit 201 to image quality adjustment processing according to need, and supplies the output stereoscopic image data after processing thereof to the HDMI transmission unit 206. The audio signal processing circuit 207 subjects the audio data output from the bit stream processing unit 201 to audio quality adjustment processing according to need, and supplies the audio data after processing thereof to the HDMI transmission unit 206.

The HDMI transmission unit 206 transmits, by communication conforming to HDMI, uncompressed image data and audio data for example, from the HDMI terminal 202. In this case, since the data is transmitted by an HDMI TMDS channel, the image data and audio data are subjected to packing, and are output from the HDMI transmission unit 206 to the HDMI terminal 202. Also, the HDMI transmission unit 206 transmits the above-described depth information set to the television receiver 300 by the HDMI interface. Details of the HDMI transmission unit 206 will be described later.

The CPU 211 controls the operation of each unit of the set top box 200. The flash ROM 212 performs storage of control software, and storage of data. The DRAM 213 configures the work area of the CPU 211. The CPU 211 loads the software and data read out from the flash ROM 212 to the DRAM 213, and starts up the software to control each unit of the set top box 200.

The remote control reception unit 215 receives a remote control signal (remote control code) transmitted from the remote control transmitter 216, and supplies to the CPU 211. The CPU 211 controls each unit of the set top box 200 based on this remote control code. The CPU 211, flash ROM 212, and DRAM 213 are connected to the internal bus 214.

The bit stream processing unit 201 will be described. The bit stream processing unit 201 includes a demultiplexer 220, a video decoder 221, an audio decoder 224, an OSD display data generating unit 226, and a video superimposing unit 228. The demultiplexer 220 extracts packets of video and audio from the bit stream data BSD, and sends to the decoders. Also, the demultiplexer 220 extracts depth information sets from the bit stream data BSD, and sends to the OSD display data generating unit 226 and above-described HDMI transmission unit 206.

The video decoder 221 reconstructs the video elementary stream from the video packets extracted at the demultiplexer 220, and performs decoding processing, thereby obtaining stereoscopic image data including the left eye image data and right eye image data. The audio decoder 224 reconstructs the audio elementary stream from the audio packets extracted at the demultiplexer 220, and performs decoding processing, thereby obtaining audio data, which is externally output from the bit stream processing unit 201.

The OSD display data generating unit 226 generates data of left eye graphics information corresponding to the left eye image data included in the stereoscopic image data, and data of right eye graphics information corresponding to the right eye image data included in the stereoscopic image data. In this case, the OSD display data generating unit 226 provides disparity between the left eye graphics information and right eye graphics information as appropriate, based on the image plane information included in the depth information set extracted at the demultiplexer 220, or the image plane information and disparity information.

For example, in the event that the stereoscopic image plane is to be situated on the near side from the monitor position, based on the image plane information, a predetermined disparity that has been determined beforehand is provided, such that the graphics information is sensed to be on the near side of the stereoscopic image plane. Also, in the event that the stereoscopic image plane is to be situated at the same position as the monitor position, or on the far side thereof, based on the image plane information, no disparity is provided. Also, for example, disparity is provided based on the disparity information such that the graphics information is sensed as being on the near side from the stereoscopic image plane.

Now, in a case where a descriptor (z-Surface descriptor) including a depth information set is inserted underneath PMT, updating of depth information for each division region during the program period is enabled (see Fig. 19). The OSD display data generating unit 226 can dynamically change the disparity to be provided to the graphics information for the left eye and right eye, by using the depth information updated in this way, e.g., disparity information.

In this case, the OSD display data generating unit 226 can repeat using the disparity information included in a certain descriptor (z-Surfacedescriptor) for each frame until the next descriptor (z-Surface descriptor) is transmitted, repeatedly. However, in this case, at the point that the descriptor is transmitted and the disparity information is updated, the disparity to be provided to the left eye and right eye may suddenly change, giving the viewer an unnatural sensation.

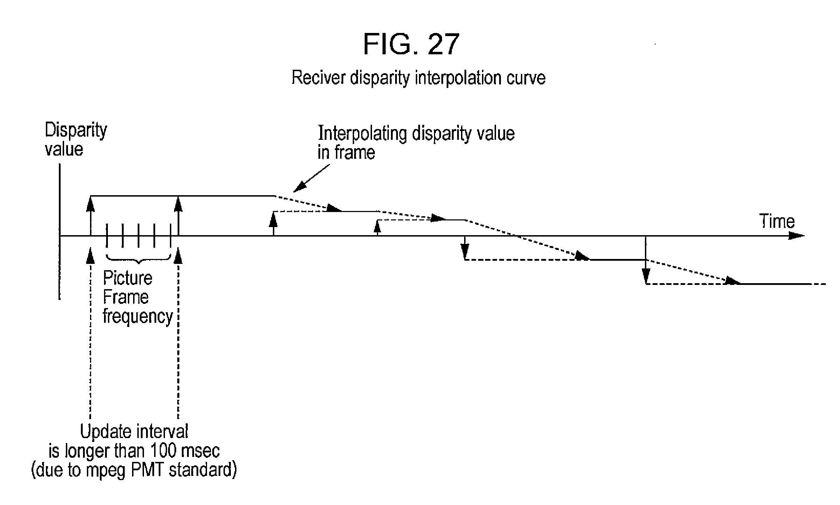

Accordingly, with the present embodiment, in the event that the next descriptor (z-Surface descriptor) is transmitted, the OSD display data generating unit 226 does not immediately use disparity information included in that descriptor, as shown in Fig. 27. That is to say, the OSD display data generating unit 226 uses disparity information according to interpolation processing for a plurality of frames (illustrated by dashed line), so as to reach the new disparity information over this plurality of frames. Due to this processing, change in the temporal direction (frame direction) of disparity information used for providing disparity can be made smooth, and a situation where the disparity to be provided to the graphics information for the left eye and right eye suddenly changes and the viewer has an unnatural sensation, can be suppressed.

The interpolation processing shown in Fig. 27 described above indicates a case where depth information for the current period is included in the descriptor (z-Surface descriptor) transmitted in accordance with the starting point-in-time of each period. Description will be made regarding an example of interpolation processing in a case that a descriptor (z-Surface descriptor) transmitted in accordance with the start point-in-time of each period includes depth information for a subsequent period, e.g., one period later.

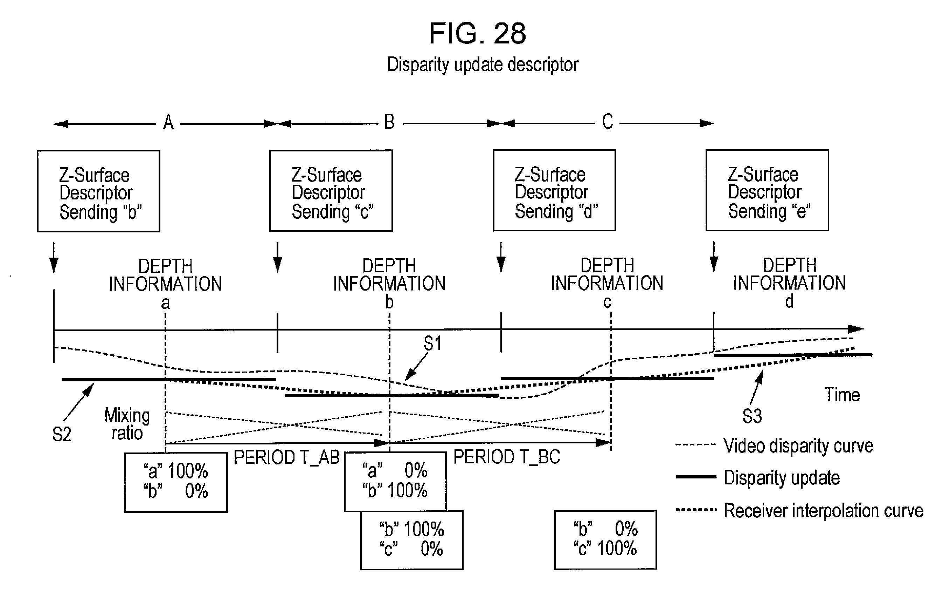

Fig. 28 illustrates an interpolation processing example of this case. In this case, the descriptor (z-Surface descriptor) transmitted at the start point-in-time of period A includes the depth information b of the period B. Also, the descriptor (z-Surface descriptor) transmitted at the start point-in-time of period B includes the depth information c of the period C. This is the same for the descriptors (z-Surface descriptor) transmitted at the start points-in-time in the subsequent periods, with the descriptors including depth information of the period next.

In this case, interpolation processing such as the following is performed, and interpolated disparity information at each point-in-time is obtained. That is to say, at the first half of each period, in a rate of mixture of the disparity information of the previous period and the disparity information of the current period, that of the current period is sequentially raised, thereby obtaining interpolated disparity information at each point-in-time. Also, at the second half of each period, in a rate of mixture of the disparity information of the current period and the disparity information of the following period, that of the following period is sequentially raised, thereby obtaining interpolated disparity information at each point-in-time.

For example, interpolated disparity information at each point-in-time in period T__AB from a middle point in period A to a middle point in period B is obtained by sequentially changing the rate of mixture of the disparity information of the period A and the disparity information of period B. In this case, the disparity information of the period A is sequentially changed from 100% to 0%, and the disparity information of the period B is sequentially changed from 0% to 100%. Also, for example, interpolated disparity information at each point-in-time in period T__BC from the middle point in period B to a middle point in period C is obtained by sequentially changing the rate of mixture of the disparity information of the period B and the disparity information of period C. In this case, the disparity information of the period B is sequentially changed from 100% to 0%, and the disparity information of the period C is sequentially changed from 0% to 100%.

Note that in Fig. 28, the dashed line S1 represents an example of a disparity information curve (Video disparity curve) in the stereoscopic image data that is transmitted, and the solid line S2 illustrates an example of disparity information updated in accordance with each period (Disparity update). Also, in Fig. 28, the dashed line S3 illustrates an example of a disparity information curve obtained by interpolation processing (Receiver interpolation curve).

Due to interpolation processing such as shown in Fig. 28 being performed, change in the temporal direction (frame direction) of disparity information used for providing disparity can be made smooth. Accordingly, a situation where the disparity to be provided to the graphics information for the left eye and right eye suddenly changes and the viewer has an unnatural sensation, can be suppressed.

The video superimposing unit 228 superimposes the data of the graphics information for the left eye and left eye generated at the OSD display data generating unit 226 upon the stereoscopic image data (left eye image data, right eye image data) obtained at the video decoder 221, and obtains stereoscopic image data for display. The video superimposing unit 228 then externally outputs the stereoscopic image data for display from the bit stream processing unit 201.

The operation of the set top box 200 will briefly be described. The television broadcasting signal input to the antenna terminal 203 is supplied to the digital tuner 204. With this digital tuner 204, the television broadcasting signal is processed, and predetermined bit stream data (transport stream) BSD corresponding to the user's selected channel is output.

The bit stream data BSD output from the digital tuner 204 is supplied to the bit stream processing unit 201. With this bit stream processing unit 201, stereoscopic image data, audio data, depth information sets, and so forth, are extracted from the bit stream data BSD. At the bit stream processing unit 201, the display data of the graphics information such as OSD or the like is synthesized as to the stereoscopic image data as appropriate.

At this time, at the bit stream processing unit 201, disparity is provided between the graphics information for the left eye to be superimposed on the left eye image, and the graphics information for the right eye to be superimposed on the right eye image, based on the depth information set. Accordingly, with regard to the graphics information such as OSD and the like to be displayed superimposed on the stereoscopic image, the consistency in perspective with the obj ects in the image can be maintained in an optimal state.

The stereoscopic image data for display obtained at the bit stream processing unit 201 is supplied to the video signal processing circuit 205. At this video signal processing circuit 205, image quality adjustment and the like is performed on the stereoscopic image data for display as necessary. The stereoscopic image data for display following processing that is output from the video signal processing circuit 205 is supplied to the HDMI transmission unit 206.

Also, the audio data obtained at the bit stream processing unit 201 is supplied to the audio signal processing circuit 207. At the audio signal processing circuit 207, the audio data is subjected to audio quality adjustment processing according to need. The audio data after processing that is output from the audio signal processing circuit 207 is supplied to the HDMI transmission unit 206. The stereoscopic image data and audio data supplied to the HDMI transmission unit 206 are transmitted from the HDMI terminal 202 to the HDMI cable 400 by an HDMI TMDS channel.

### [Description of Television Receiver]

Returning to Fig. 1, the television receiver 300 receives stereoscopic image data transmitted from the set top box 200 via the HDMI cable 400. This television receiver 300 includes a 3D signal processing unit 301. This 3D signal processing unit 301 subjects the stereoscopic image data to processing (decoding processing) corresponding to the transmission format to generate left eye image data and right eye image data. This 3D signal processing unit 301 obtains left eye image data and right eye image data making up stereoscopic image data.

### [Configuration Example of Television Receiver]

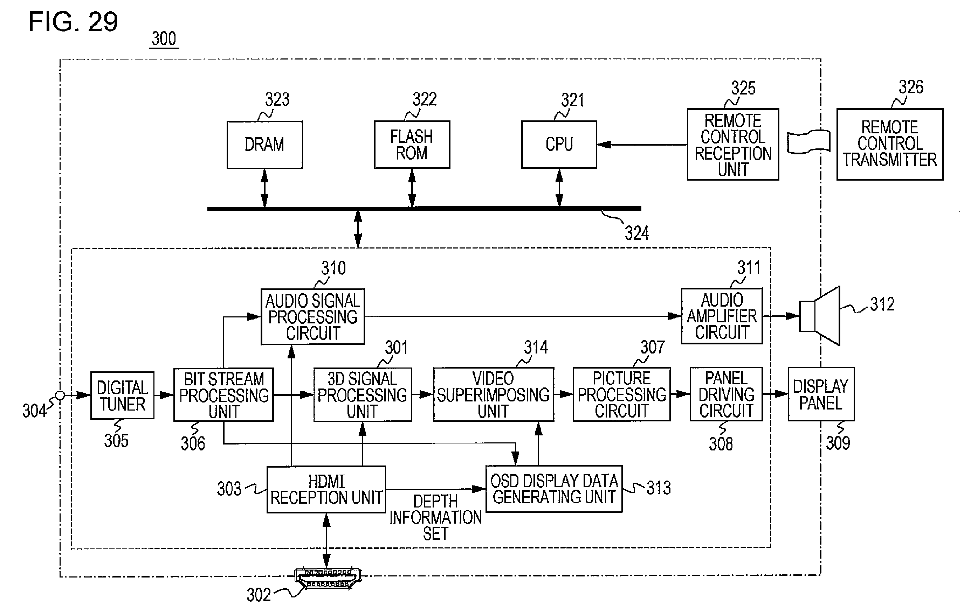

A configuration example of the television receiver 300 will be described. Fig. 29 illustrates a configuration example of the television receiver 300. This television receiver 300 includes the 3D signal processing unit 301, an HDMI terminal 302, an HDMI reception unit 303, an antenna terminal 304, a digital tuner 305, and a bit stream processing unit 306.

Also, this television receiver 300 includes an OSD display data generating unit 313, a video superimposing unit 314, a video processing circuit 307, a panel driving circuit 308, a display panel 309, an audio signal processing circuit 310, an audio amplifier circuit 311, and a speaker 312. Also, this television receiver 300 includes a CPU 321, flash ROM 322, DRAM 323, internal bus 324, a remote control reception unit 325, and a remote control transmitter 326.

The antenna terminal 304 is a terminal for inputting a television broadcasting signal received at a reception antenna (not illustrated). The digital tuner 305 processes the television broadcasting signal input to the antenna terminal 304, and outputs predetermined bit stream data (transport stream) corresponding to the user's selected channel.

The bit stream processing unit 306 is configured in the same way as with the bit stream processing unit 201 of the set top box 200. This bit stream processing unit 306 extracts stereoscopic image data (left eye image data, right eye image data), audio data, depth information sets, and so forth, from the bit stream data.

The HDMI reception unit 303 receives uncompressed image data and audio data supplied to the HDMI terminal 302 via the HDMI cable 400 by communication conforming to HDMI. This HDMI reception unit 303 of which the version is, for example, HDMI 1.4a, is in a state in which the stereoscopic image data can be handled. Also, this HDMI reception unit 303 receives the above-described depth information set from the set top box 200 with the HDMI interface. Details of the HDMI reception unit 303 will be described later.

The 3D signal processing unit 301 subjects the stereoscopic image data received at the HDMI reception unit 303, or obtained at the bit stream processing unit 306, to decoding processing and generates left eye image data and right eye image data. The 3D signal processing unit 301 performs decoding processing corresponding to the transmission data format for the stereoscopic image data obtained at the bit stream processing unit 306. Also, the 3D signal processing unit 301 performs decoding processing corresponding to the TMDS transmission data structure for the stereoscopic image data obtained at the HDMI reception unit.

The OSD display data generating unit 313 generates data of left eye graphics information corresponding to the left eye image data included in the stereoscopic image data, and generates data of right eye graphics information corresponding to the right eye image data included in the stereoscopic image data. This graphics information is superimposing information for OSD display such as menus, program listings, and so forth.

In this case, the OSD display data generating unit 313 provides disparity between the left eye graphics information and right eye graphics information, based on the depth information set obtained at the bit stream processing unit 306, or received with the HDMI reception unit 303. Note that the OSD display data generating unit 313 provides disparity as appropriate between the left eye graphics information and right eye graphics information, based on the image plane information included in the depth information set, or the image plane information and disparity information.

For example, in the event that the stereoscopic image plane is to be situated on the near side from the monitor position, based on the image plane information, a predetermined disparity that has been determined beforehand is provided, such that the graphics information is sensed to be on the near side of the stereoscopic image plane. Also, in the event that the stereoscopic image plane is to be situated at the same position as the monitor position, or on the far side thereof, based on the image plane information, no disparity is provided. Also, for example, disparity is provided based on the disparity information such that the graphics information is sensed as being on the near side from the stereoscopic image plane.

The video superimposing unit 314 superimposes the data of the graphics information for the left eye and left eye generated at the OSD display data generating unit 313 upon the stereoscopic image data (left eye image data, right eye image data) obtained at the 3D signal processing unit 301, and obtains stereoscopic image data for display.

The video processing circuit 307 generates image data for displaying a stereoscopic image based on the left eye image data and right eye image data generated at the 3D signal processing unit 301. Also, the video processing circuit 307 subjects the image data to image quality adjustment processing according to need. The panel driving circuit 308 drives the display panel 309 based on the image data output from the video processing circuit 307. The display panel 309 is configured of, for example, an LCD (Liquid Crystal Display), PDP (Plasma DisplayPanel), or the like.

The audio signal processing circuit 310 subjects the audio data received at the HDMI reception unit 303 or obtained at the bit stream processing unit 306 to necessary processing such as D/A conversion or the like. The audio amplifier circuit 311 amplifies the audio signal output from the audio signal processing circuit 310, supplies to the speaker 312.

The CPU 321 controls the operation of each unit of the television receiver 300. The flash ROM 322 performs storing of control software and storing of data. The DRAM 323 makes up the work area of the CPU 321. The CPU 321 loads the software and data read out from the flash ROM 322 to the DRAM 323, starts up the software, and controls each unit of the television receiver 300.

The remote control unit 325 receives the remote control signal (remote control code) transmitted from the remote control transmitter 326, and supplies to the CPU 321. The CPU 321 controls each unit of the television receiver 300 based on this remote control code. The CPU 321, flash ROM 322, and DRAM 323 are connected to the internal bus 324.

The operations of the television receiver 300 illustrated in Fig. 29 will briefly be described. The HDMI reception unit 303 receives the stereoscopic image data and audio data transmitted from the set top box 200 connected to the HDMI terminal 302 via the HDMI cable 400. The stereoscopic image data received at this HDMI reception unit 303 is supplied to the 3D signal processing unit 301. Also, the audio data received at this HDMI reception unit 303 is supplied to the audio signal processing unit 310.

The television broadcasting signal input to the antenna terminal 304 is supplied to the digital tuner 305. With this digital tuner 305, the television broadcasting signal is processed, and predetermined bit stream data (transport stream) BSD corresponding to the user's selected channel is output.

The bit stream data BSD output from the digital tuner 305 is supplied to the bit stream processing unit 306. With this bit stream processing unit 306, stereoscopic image data (left eye image data, right eye image data), audio data, depth information sets, and so forth are extracted from the bit stream data. The stereoscopic image data obtained at the bit stream processing unit 306 is supplied to the 3D signal processing unit 301. Also, the audio data obtained at the bit stream processing unit 306 is supplied to the audio processing circuit 310.

With the 3D signal processing unit 301, the stereoscopic image data received at the HDMI reception unit 303, or obtained at the bit stream processing unit 306, is subjected to decoding processing, and full-resolution left eye image data and right eye image data are generated. The left eye image data and right eye image data are supplied to the video superimposing unit 314.

The OSD display data generating unit 313 generates data of left eye graphics information corresponding to the left eye image data included in the stereoscopic image data, and generates data of right eye graphics information corresponding to the right eye image data included in the stereoscopic image data. In this case, the OSD display data generating unit 313 provides disparity between the left eye graphics information and right eye graphics information, based on the depth information set obtained at the bit stream processing unit 306, or received with the HDMI reception unit 303.

At the video superimposing unit 314, data of the graphics information for the left eye and left eye generated at the OSD display data generating unit 313 is superimposed on the stereoscopic image data (left eye image data, right eye image data) obtained at the 3D signal processing unit 301, thereby obtaining stereoscopic image data for display. At this video processing circuit 307, image data for displaying a stereoscopic image is generated based on the left eye image data and right eye image data, and image quality adjustment processing is also performed according to need.

The image data obtained at this video processing circuit 307 is supplied to the panel driving circuit 308. Accordingly, a stereoscopic image is displayed on the display panel 309. For example, a left image according to left eye image data, and a right image according to right eye image data are alternately displayed in a time-sharing manner. The viewer can view the left eye image alone by the left eye, and the right eye image alone by the right eye, and consequently can sense the stereoscopic image by wearing shutter glasses wherein the left eye shutter and right eye shutter are alternately opened in sync with display of the display panel 309.

Also, at the audio signal processing circuit 310, the audio data received at the HDMI reception unit 303 or obtained at the bit stream processing unit 306 is subjected to necessary processing such as D/A conversion or the like. This audio data is amplified at the audio amplifier circuit 311, and then supplied to the speaker 312. Accordingly, audio corresponding to the display image of the display panel 309 is output from the speaker 312.

### [Configuration Example of HDMI Transmission Unit and HDMI Reception Unit]

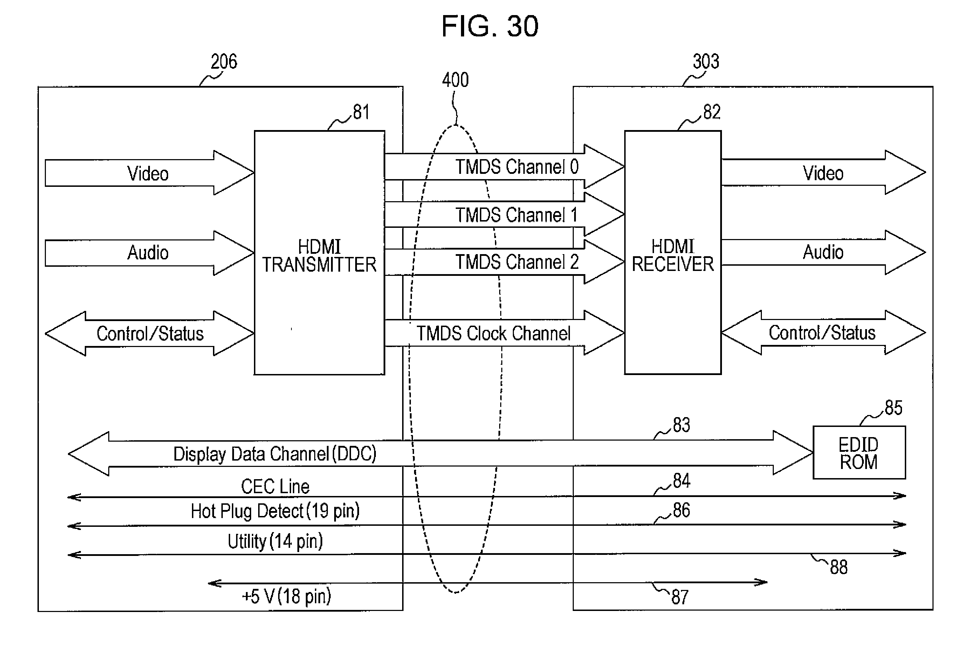

Fig. 30 illustrates, with the stereoscopic image display system 10 in Fig. 1, a configuration example of the HDMI transmission unit (HDMI source) 206 of the set top box 200, and the HDMI reception unit (HDMI sink) 303 of the television receiver 300.

The HDMI transmission unit 206 transmits differential signals corresponding to the pixel data of uncompressed one screen worth of image to the HDMI reception unit 303 in one direction during an effective image section (hereafter, also referred to as "active video section"). Here, the effective image section is a section obtained by removing the horizontal blanking section and the vertical blanking section from a section between a certain vertical synchronizing signal and the next vertical synchronizing signal. Also, the HDMI transmission unit 206 transmits differential signals corresponding to the audio data, control data, other auxiliary data, and so forth, following at least an image, to the HDMI reception unit 303 in one direction using multiple channels during the horizontal blanking section or vertical blanking section.

The following transmission channels are provided as the transmission channels of the HDMI system made up of the HDMI transmission unit 206 and the HDMI reception unit 303. Specifically, there are three TMDS channels #0 through #2 serving as transmission channels for serially transmitting pixel data and audio data from the HDMI transmission unit 206 to the HDMI reception unit 303 in one direction in sync with pixel clock. Also, there is a TMDS clock channel serving as a transmission channel for transmitting pixel clock.

The HDMI transmission unit 206 includes an HDMI transmitter 81. The transmitter 81 converts, for example, the pixel data of an uncompressed image into corresponding differential signals, and serially transmits to the HDMI reception unit 303 connected via the HDMI cable 400 in one direction by the three TMDS channels #0, #1, and #2 which are multiple channels.

Also, the transmitter 81 converts audio data following an uncompressed image, further necessary control data and other auxiliary data, and so forth into corresponding differential signals, and serially transmits to the HDMI reception unit 303 in one direction by the three TMDS channels #0, #1, and #2.

Further, the transmitter 81 transmits pixel clock in sync with pixel data transmitted by the three TMDS channels #0, #1, and #2 to the HDMI reception unit 303 connected via the HDMI cable 400 using the TMDS clock channel. Here, with one TMDS channel #i (i = 0, 1, 2), 10-bit pixel data is transmitted during one clock of the pixel clock.

The HDMI reception unit 303 receives the differential signal corresponding to the pixel data transmitted from the HDMI transmission unit 206 in one direction during an active video section using the multiple channels. Also, this HDMI reception unit 303 receives the differential signals corresponding to the audio data and control data transmitted from the HDMI transmission unit 206 in one direction during the horizontal blanking section or vertical blanking section using the multiple channels.

Specifically, the HDMI reception unit 303 includes an HDMI receiver 82. This HDMI receiver 82 receives the differential signal, and the differential signals corresponding to the audio data and control data, transmitted from the HDMI transmission unit 206 in one direction, using the TMDS channels #0, #1, and #2. In this case, the HDMI receiver receives the differential signals in sync with the pixel clock transmitted from the HDMI transmission unit 206 by the TMDS clock channel.

The transmission channels of the HDMI system include, in addition to the above TMDS channels #0 through #2 and the TMDS clock channel, transmission channels called a DDC (Display Data Channel) 83 and a CEC line 84. The DDC 83 is made up of unshown two signal lines included in the HDMI cable 400. The DDC 83 is used for the HDMI transmission unit 206 reading out E-EDID (Enhanced Extended Display Identification Data) from the HDMI reception unit 303.

Specifically, the HDMI reception unit 303 includes EDID ROM (Read Only Memory) 85 in which the E-EDID that is performance information relating to its own performance (Configuration/capability) in addition to the HDMI receiver 81. The HDMI transmission unit 206 reads out the E-EDID via the DDC 83 from the HDMI reception unit 303 connected via the HDMI cable 400, for example, in response to a request from the CPU 211 (see Fig. 26).

The HDMI transmission unit 206 transmits the read E-EDID to the CPU 211. The CPU 211 stores this E-EDID in the flash ROM 212 or DRAM 213. The CPU 211 recognizes the performance settings of the HDMI reception unit 303 based on the E-EDID. For example, the CPU 211 recognizes whether or not the television receiver 300 included in the HDMI reception unit 303 can handle stereoscopic image data, and in the event that stereoscopic image data can be handled, further recognizes what kind of TMDS transmission data structure can be handled.

The CEC line 84 is made up of unshown one signal line included in the HDMI cable 400, and is used for performing bidirectional communication of data for control between the HDMI transmission unit 206 and the HDMI reception unit 303. This CEC line 84 makes up a control data line.

Also, the HDMI cable 400 includes a line (HPD line) 86 connected to a pin called HPD (Hot Plug Detect). The source device can detect connection of the sink device by taking advantage of this line 86. Note that this HPD line 86 is also used as an HEAC- line making up a bidirectional communication path. Also, the HDMI cable 400 includes a line (power supply line) 87 user for supplying power from the source device to the sink device. Further, the HDMI cable 400 includes a utility line 88. This utility line 88 is used as HEAC+ line making up the bidirectional communication path.

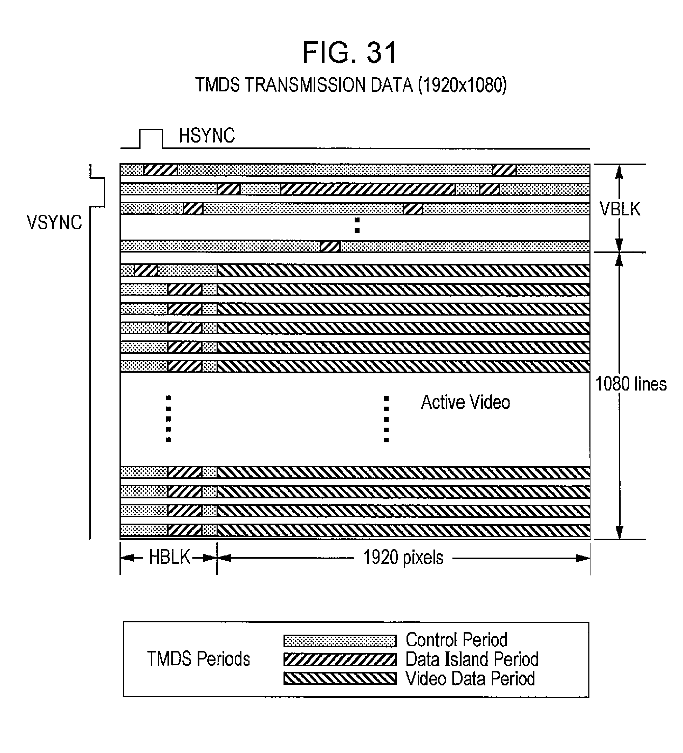

Fig. 31 illustrates a structure example of the TMDS transmission data. This Fig. 31 illustrates the sections of various types of transmission data in the event that image data with width x length of 1920 pixels x 1080 lines is transmitted using the TMDS channels #0, #1, and #2.

With a video field (Video Field) where transmission data is transmitted using the three TMDS channels #0, #1, and #2 of the HDMI, there are three types of sections according to the type of transmission. These three types of sections are a video data section (Vide Data period), a data island section (Data Islandperiod), and a control section (Control period).

Here, a video field section is a section from the leading edge (activeedge) of a certain vertical synchronizing signal to the leading edge of the next vertical synchronizing signal. This video field section is divided into a horizontal blanking period (horizontal blanking), a vertical blanking period (verticalblanking), and an active video section (Active Video). This active video section is a section obtained by removing the horizontal blanking period and the vertical blanking period from the video field section.

The video data section is assigned to the active video section. With this video data section, the data of 1920 pixels × 1080 lines worth of effective pixels (Active pixels) making up uncompressed one screen worth of image data is transmitted.

The data island section and control section are assigned to the horizontal blanking period and vertical blanking period. With the data island section and control section, auxiliary data (Auxiliary data) is transmitted. That is to say, the data island section is assigned to a portion of the horizontal blanking period and vertical blanking period. With this data island section, of the auxiliary data, data not relating to control, e.g., the packet of audio data, and so forth are transmitted.

The control section is assigned to another portion of the horizontal blanking period and vertical blanking period. With this control section, of the auxiliary data, data relating to control, e.g., the vertical synchronizing signal and horizontal synchronizing signal, control packet, and so forth are transmitted.

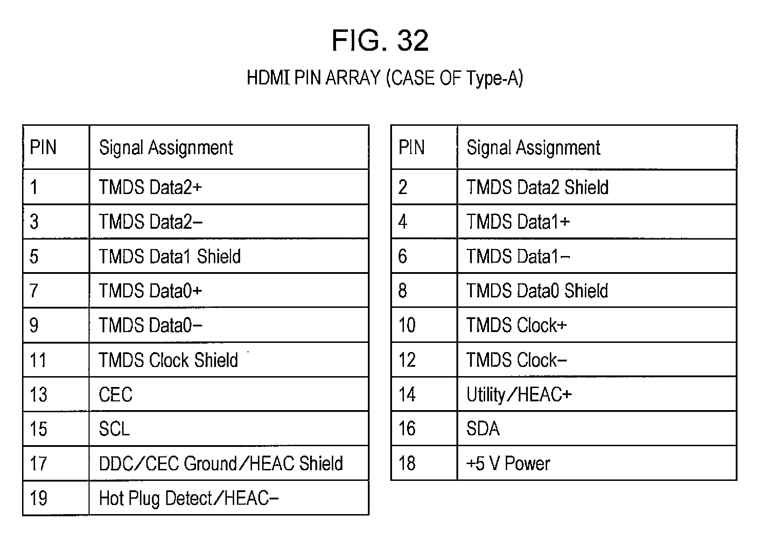

Fig. 32 illustrates an example of the pin alignment of the HDMI terminal. The pin alignment illustrated in Fig. 32 is called type A (type-A). TMDS Data #i+ and TMDS Data #i-that are the differential signal of the TMDS channel #i are transmitted by two lines that are differential lines. These two lines are connected to pins to which the TMDS Data #i+ is assigned (pins having a pin number of 1, 4, or 7), and pins to which the TMDS Data #i- is assigned (pins having a pin number of 3, 6, or 9).

Also, the CEC line 84 where a CEC signal that is data for control is transmitted is connected to a pin of which the pin number is 13. Also, a line where an SDA (Serial Data) signal such as the E-EDID or the like is transmitted is connected to a pin of which the pin number is 16. A line where an SCL (Serial Clock) signal that is a clock signal to be used for synchronization at the time of transmission/reception of the SDA signal is transmitted is connected to a pin of which the pin number is 15. The above DDC 83 is configured of a line where the SDA signal is transmitted, and a line where the SCL signal is transmitted.

Also, the HDP line (HEAC- line) 86 for the source device detecting connection of the sink device as described above is connected to a pin of which the pin number is 19. Also, the utility line (HEAC+ line) 88 is connected to a pin of which the pin number is 14. Also, the line 87 for supplying power supply as described above is connected to a pin of which the pin number is 18.

### [Method of Transmitting Depth Information Set with HDMI]

As for a method to transmit a depth information set with the HDMI interface, a method using the HDMI Vendor Specific InfoFrame, for example, can be conceived. With this method, in an HDMI Vendor Specific InfoFrame paket, HDMI_Video_Format = "010" and 3D_Meta_present = 1 are set, and Vendor Specific InfoFrame extension is specified. In this case, the 3D_Metadata_type is defined as an unused "100", for example, and a depth information set is specified.

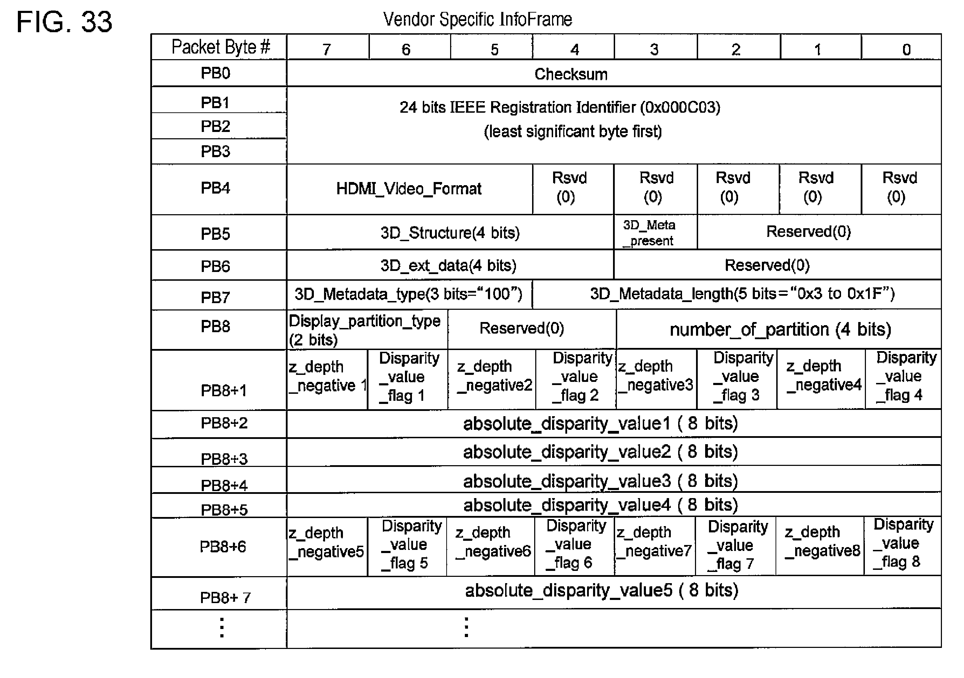

Fig. 33 illustrates the packet structure of the HDMI Vendor Specific InfoFrame. This HDMI Vendor Specific InfoFrame is defined in CEA-861-D, so detailed description thereof will be omitted.

3-bit information "HDMI_Video_Format" indicating the type of image data is situated from the 7th bit to the 5th bit of the 4th byte (PB4). In the event that the image data is 3D image data, the information of these three bits is "010". Also, in the event that the image data is 3D image data in this way, 4-bit information "3D_Structure" indicating the structure of the TMDS transmission data is situated from the 7th bit to the 4th bit of the 5th byte (PB5). For example, in the case of the frame packing format, the information of these four bits is "0000".

Also, "3D_Meta_present" is situated at the 3rd bit of the 5th byte (PB5), and in the case of specifying Vendor Specific InfoFrame extension, this one byte is set to "1". Also, "3D_Metadata_type" is situated from the 7th bit to the 5th bit of the 7th byte (PB7). In the event of specifying information of a depth information set, the information of these three bits is set to an unused "100", for example. Also, "3D_Metadata_length" is situated from the 4th bit to the 0th bit of the 7th byte (PB7). These five bits of information indicate the length of the 3D_Metadata region to follow.

Also, 2-bit information "display_partition_type" is situated from the 7th bit to the 6th bit of the 8th byte (PB8). Also, 4-bit information "number_of_partition" is situated from the 3rd bit to the 0th bit of the 8th byte (PB8). Subsequently, depth information of a number corresponding to the number of divisions of the image display plane are situated. This depth information includes 1-bit information of "z_depth_negative" (image plane information), and further, when "disparity_value_flag" indicates that disparity information exists, 8-bit information of "absolute_disparity_value" is included.

As described above, with the image transmission/reception system 10 shown in Fig. 1, along with stereoscopic image data of a predetermined program having left eye image data and right eye image data, a depth information set corresponding to this stereoscopic image data, is transmitted from the broadcasting station 100 (transmission data generating unit 201) to a set top box 200 and television receiver 300. Accordingly, at the reception side, that subjected to disparity adjustment in accordance to perspective with the objects in the image can be used as superimposing information to be superimposed on the left eye image and right eye image, such as graphics information like OSD or the like for example, by using this depth information set. Accordingly, this enables maintaining of consistency in perspective with each object in the image, when displaying graphics information like OSD or the like for example.

Also, with the image transmission/reception system 10 shown in Fig. 1, the depth information set transmitted from the broadcasting station 100 (transmission data generating unit 201) to the set top box 200 and television receiver 300 includes division information of the image display plane and depth information of each division region, and is transmitted having been included in a descriptor inserted into a bit stream data (multiplexed data stream) BSD having data streams including stereoscopic image data. That is to say, the broadcasting station 100 can easily transmit depth information sets to the reception side using descriptors.

Also, with the image transmission/reception system 10 shown in Fig. 1, along with stereoscopic image data of a predetermined program, a depth information set corresponding thereto (including division information of the image display plane and depth information of each division region) is transmitted from the set top box 200 to the television receiver 300, via the HDMI cable 400. Accordingly, at the television receiver 300, that subjected to disparity adjustment in accordance to perspective with the objects in the image can be used as superimposing information to be superimposed on the left eye image and right eye image, such as graphics information like OSD or the like for example, by using the depth information set. Accordingly, this enables maintaining of consistency in perspective with each object in the image, when displaying graphics information such as OSD or the like for example.

### <2. Modifications>

Note that with the above-described embodiment, an arrangement has been illustrated where the image transmission/reception system 10 is configured of the broadcasting station 100, set top box 200, and television receiver 300. However, the television receiver 300 has a bit stream processing unit 306 which functions equivalently to the bit stream processing unit 201 within the set top box 200, as shown in Fig. 29. Accordingly, an image transmission/reception system 10A such as shown in Fig. 34 which is configured of the broadcasting station 100 and television receiver 300 can also be conceived.

Also, with the above-described embodiment, an arrangement has been illustrated where HDMI Vendor Specific InfoFrame is used as a method for transmitting the depth information set from the set top box 200 to the television receiver 300. Alternatively, a method using active space (Active Space), and further, transmitting over a bidirectional communication path configured of an HPD line 86 (HEAC- line) and utility line 88 (HEAC+ line), can be conceived.

Also, with the above-described embodiment, an arrangement has been illustrated where the set top box 200 and the television receiver 300 are connected by an HDMI digital interface. However, it is needless to say that the present invention can be applied even in cases where these are connected by a digital interface similar to the HDMI digital interface (including wireless besides cable).

Also, with the above-described embodiment, an arrangement has been illustrated where the depth information set used at the bit stream processing unit 201 is transmitted from the set top box 200 to the television receiver 300 by an HDMI interface. However, it is needless to say that technology for transmitting depth information sets via HDMI interfaces in this way can also be applied to combinations of other source devices and sink devices. For example, conceivable source devices include disc players such as BD and DVD and the like, and further gaming devices and the like, and conceivable sink devices include monitor devices, projector devices, and so forth.

### Industrial Applicability

The present invention enables good display of superimposing information at the time of stereoscopic image display, such as graphics information like OSD for example, and is applicable to a stereoscopic image display system and so forth.

### Reference Signs List

- 10, 10A: stereoscopic image display system
- 100: broadcasting station
- 110: transmission data generating unit
- 111L, 111R: camera
- 112: video framing unit
- 113: disparity map creating unit
- 114: microphone
- 115: data extracting unit
- 115a: data recording medium
- 116 to 118: switchover switches
- 119: video encoder
- 120: audio encoder
- 122: depth information set creating unit
- 126: multiplexer
- 200: set top box (STB)
- 201: bit stream processing unit
- 202: HDMI terminal
- 203: antenna terminal
- 204: digital tuner
- 205: video processing circuit
- 206: HDMI transmission unit
- 207: audio processing circuit
- 211: CPU
- 215: remote control reception unit
- 216: remote control transmitter
- 220: demultiplexer
- 221: video decoder
- 224: audio decoder
- 226: OSD display data generating unit
- 228: video superimposing unit
- 300: television receiver (TV)
- 301: 3D signal processing unit
- 302: HDMI terminal
- 303: HDMI reception unit
- 304: antenna terminal
- 305: digital tuner
- 306: panel driving circuit
- 307: video processing circuit
- 308: panel driving circuit
- 309: display panel
- 310: audio processing circuit
- 311: audio amplifier circuit
- 312: speaker
- 313: OSD display data generating unit
- 314: video superimposing unit
- 321: CPU
- 325: remote control reception unit
- 326: remote control transmitter
- 400: HDMI cable

## Claims

1. A stereoscopic image data transmission device comprising:
an image data output unit configured to output left eye image data and right eye image data making up a stereoscopic image;
a depth information output unit configured to output depth information corresponding to said stereoscopic image; and
a transmission unit configured to transmit said image data and said depth information;
wherein said depth information includes division information of an image display plane and depth information of the division regions;
and wherein said transmission unit transmits a multiplexed data stream having a data stream including said image data, and inserts a descriptor including said depth information in said multiplexed data stream.

2. The stereoscopic image data transmission device according to Claim 1, wherein said depth information is image plane information indicating whether or not a stereoscopic image plane is on the near side from a monitor position.

3. The stereoscopic image data transmission device according to Claim 2, wherein said image plane information is code information making up disparity information of a left eye image and right eye image.

4. The stereoscopic image data transmission device according to Claim 1, wherein said depth information is image plane information indicating whether or not a stereoscopic image plane is on the near side from a monitor position, or said image plane information and disparity information of a left eye image and right eye image;
and wherein flag information indicating the existence of said disparity information is inserted into said depth information.

5. The stereoscopic image data transmission device according to Claim 4, wherein said depth information is code information making up said disparity information, or absolute value information making up said code information and said disparity information.

6. The stereoscopic image data transmission device according to Claim 1, wherein said multiplexed data stream includes a program map table serving as program-specific information, indicating which program each elementary stream included in said multiplexed data stream belongs to;
and wherein said descriptor is inserted underneath said program map table.

7. The stereoscopic image data transmission device according to Claim 1, wherein said multiplexed data stream includes an event information table serving as service information for performing management in increments of events;
and wherein said descriptor is inserted underneath said event information table.

8. The stereoscopic image data transmission device according to Claim 1, wherein said division information is made up of information indicating division type and information indicating number of divisions.

9. The stereoscopic image data transmission device according to Claim 8, wherein said division types include a division type where said image display plane is divided using diagonal lines.

10. The stereoscopic image data transmission device according to Claim 8, wherein said division types include a division type where said image display plane is divided using horizontal direction lines and/or vertical direction lines.

11. The stereoscopic image data transmission device according to Claim 1, where said transmission unit inserts said descriptor into said multiplexed data stream, corresponding to the start point-in-time of every predetermined period of said image data;
and wherein the descriptor inserted into said multiplexed data stream corresponding to the start point-in-time of every predetermined period includes depth information of a period later than said period.

12. A stereoscopic image data transmission method comprising:
an image data output step to output left eye image data and right eye image data making up a stereoscopic image;
a depth information output step to output depth information corresponding to said stereoscopic image; and
a transmission step to transmit said image data and said depth information;
wherein said depth information includes division information of an image display plane and depth information of the division regions;
and wherein, in said transmission step, a multiplexed data stream having a data stream including said image data is transmitted, and a descriptor including said depth information is inserted to said multiplexed data stream.

13. A stereoscopic image data transmission device comprising:
an image data output unit configured to output left eye image data and right eye image data making up a stereoscopic image;
a depth information output unit configured to output depth information corresponding to said stereoscopic image; and
a transmission unit configured to transmit said image data and said depth information;
wherein said depth information includes division information of an image display plane and depth information of the division regions;
and wherein said depth information is image plane information indicating whether or not a stereoscopic image plane is on the near side from a monitor position.

14. A stereoscopic image data reception device comprising:
a reception unit configured to receive a multiplexed data stream having a data stream including left eye image data and right eye image data making up a stereoscopic image, in which is inserted a descriptor including depth information made up of division information of an image display plane and depth information of the division regions corresponding to said stereoscopic image;
a superimposing information data output unit configured to output data of left eye superimposing information corresponding to said left eye image data obtained from said multiplexed data stream, and data of right eye superimposing information corresponding to said right eye image data obtained from said multiplexed data stream; and
a data superimposing unit configured to superimpose said data of left eye superimposing information and said data of right eye superimposing information on said left eye image data and said right eye image data obtained from said multiplexed data stream;
wherein said superimposing data output unit provides disparity between said left eye superimposing information and said right eye superimposing information, based on said depth information obtained from said multiplexed data stream.

15. The stereoscopic image data reception device according to Claim 14, wherein, at the time of providing disparity between said left eye superimposing information and said right eye superimposing information based on disparity information included in said depth information, in the event there is updating of disparity information by a new said descriptor being received at said reception unit, said superimposing data output unit uses disparity information obtained by interpolation processing for a plurality of frames so as to reach said new disparity information over said plurality of number of frames.

16. The stereoscopic image data reception device according to Claim 14, wherein said descriptor has been inserted into said multiplexed data stream corresponding to the start point-in-time of every predetermined period of said image data;
and wherein the descriptor inserted into said multiplexed data stream corresponding to the start point-in-time of every period includes depth information of a period later than said period;
and wherein at the time of providing disparity between said left eye superimposing information and said right eye superimposing information in each period, said superimposing data output unit uses disparity information obtained by interpolation processing using disparity information included in said depth information of said period and periods before and after said period.

17. A stereoscopic image data reception device comprising:
a reception unit configured to receive a multiplexed data stream having a data stream including left eye image data and right eye image data making up a stereoscopic image, in which is inserted a descriptor including depth information made up of division information of an image display plane and depth information of the division regions corresponding to said stereoscopic image; and
a transmission unit configured to transmit said left eye image data and said right eye image data, and said depth information, obtained from said multiplexed data stream, to an external device via a transmission path.

18. The stereoscopic image data reception device according to Claim 17, wherein said transmission unit transmits said image data to said external device via said transmission path in multiple channels by differential signals;
and wherein said depth information is inserted in a blanking period of said image data, thereby transmitting said depth information to said external device.
